(19) Europäisches Patentamt
European Patent Office
Office européen des brevets

(11) **EP 4 226 230 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **21786941.1**

(22) Anmeldetag: **05.10.2021**

(51) Internationale Patentklassifikation (IPC):
**G05D 1/695** (2024.01)  **G05D 1/698** (2024.01)
**G05D 109/20** (2024.01)

(52) Gemeinsame Patentklassifikation (CPC):
**G05D 1/695; G05D 1/6985; G05D 1/6987;**
G05D 2109/20

(86) Internationale Anmeldenummer:
**PCT/EP2021/077405**

(87) Internationale Veröffentlichungsnummer:
**WO 2022/073980 (14.04.2022 Gazette 2022/15)**

(54) **ZUSTANDSBESTIMMUNG VON OBJEKTEN IN EINEM OBJEKTVERBUND**

STATE DETERMINATION OF OBJECTS IN AN OBJECT GROUP

DÉTERMINATION DE L'ÉTAT D'OBJETS DANS UN GROUPE D'OBJETS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.10.2020 DE 102020126564**

(43) Veröffentlichungstag der Anmeldung:
**16.08.2023 Patentblatt 2023/33**

(73) Patentinhaber: **Airbus Defence and Space GmbH**
**82024 Taufkirchen (DE)**

(72) Erfinder: **NEUHAUSER, Tobias**
**82024 Taufkirchen (DE)**

(74) Vertreter: **LKGLOBAL**
**Lorenz & Kopf Patentanwalt**
**Attorney at Law PartG mbB**
**Brienner Straße 11**
**80333 München (DE)**

(56) Entgegenhaltungen:
**EP-A1- 2 363 731    CN-A- 111 273 687**
**FR-A1- 2 632 755**

- **SAE FUJII ET AL: "Cooperative Vehicle Positioning via V2V Communications and Onboard Sensors", VEHICULAR TECHNOLOGY CONFERENCE (VTC FALL), 2011 IEEE, IEEE, 5 September 2011 (2011-09-05), pages 1 - 5, XP032029702, ISBN: 978-1-4244-8328-0, DOI: 10.1109/VETECF.2011.6093218**
- **HAO LI ET AL: "Cooperative Multi-Vehicle Localization Using Split Covariance Intersection Filter", IEEE INTELLIGENT TRANSPORTATION SYSTEMS MAGAZINE, IEEE, USA, vol. 5, no. 2, 1 July 2013 (2013-07-01), pages 33 - 44, XP011505137, ISSN: 1939-1390, DOI: 10.1109/MITS.2012.2232967**

**Beschreibung**

Technisches Gebiet

Die vorliegende Beschreibung betrifft ein Verfahren zum Bestimmen eines Korrekturwertes für einen Zustandswert eines Objekts in einem Verbund bestehend aus einer Mehrzahl von Objekten, welches ausgestaltet ist, in einem Verbund aus mehreren Objekten einen Korrekturwert für den eigenen Zustand zu ermitteln.

Technischer Hintergrund

Der Zustand von Fahrzeugen, beispielsweise Landfahrzeugen, Wasserfahrzeugen oder Luftfahrzeugen, ist insbesondere dann von hoher Bedeutung, wenn mehrere Fahrzeuge sich in einem Verbund bewegen sollen. Dies erfordert, dass die einzelnen Fahrzeuge über möglichst genaue Zustandswerte verfügen, damit der relative Zustand zu anderen Fahrzeugen des Verbunds mit einer guten Genauigkeit entweder in expliziter oder impliziter Form bekannt ist.

Gerade wenn sich mehrere Fahrzeuge im Verbund bewegen, ist eine Fusion von absoluten Zustandswerten, die sich auf ein globales oder externes Koordinatensystem, beziehungsweise auf eine quasi-statische Umgebung beziehen, und relativen Zustandswerten, die sich auf nicht-statische bzw. nichtstationäre Objekte (d.h. auf die anderen Fahrzeuge des Fahrzeugverbunds) beziehen, notwendig, um eine in sich konsistente absolute Zustandsschätzung der Fahrzeuge des Fahrzeugverbunds, bzw. eine hochgenau relative Zustandsschätzung zu den einzelnen Fahrzeugen zu gewährleisten. Es wird darauf hingewiesen, dass die Begriffe "Zustandsschätzung" und "Zustandswert" hier als Synonyme verwendet werden, weil ein Zustandswert zunächst nichts anderes ist als eine Zustandsschätzung.

Unter einem Zustand oder Zustandswert können verschiedene Angaben über ein Fahrzeug verstanden werden, wie beispielsweise Position, Geschwindigkeit, Lage, relative Position zu anderen Objekten, Abstand zu anderen Objekten, relative Geschwindigkeit, relative Lage, Beschleunigung, etc.

EP 2 363 731 A1 beschreibt ein Positionsbestimmungssystem welches aufweist: ein Positionsmessmittel zum Empfangen von Positionsmesssignalen von einer Vielzahl von Emissionsquellen und zum Berechnen von Positionsinformationen eines ersten mobilen Objekts; ein Abstandsmessmittel zum Messen eines Abstands von dem ersten mobilen Objekt und zu einem zweiten mobilen Objekt; ein Beziehungsbestimmungsmittel zum Bestimmen des Vorhandenseins oder Nichtvorhandenseins einer Beziehung zwischen dem ersten mobilen Objekt und dem zweiten mobilen Objekt auf der Grundlage der relativen Position des zweiten mobilen Objekts auf der Grundlage des Abstands und zum Auswählen von Positionsmesssignalen von Emissionsquellen, die sich von den Emissionsquellen der von dem ersten mobilen Objekt empfangenen Positionsmesssignale unterscheiden; ein Positionskorrekturmittel zum Korrigieren einer Position des ersten mobilen Objekts auf der Grundlage der von dem ersten mobilen Objekt empfangenen Positionsmesssignale und der von dem Beziehungsbestimmungsmittel ausgewählten Positionsmesssignale.

CN 111 273 687 A beschreibt ein kooperatives relatives Navigationsverfahren für mehrere unbemannte Luftfahrzeuge, das auf einer GNSS-Beobachtungsgröße und einer Abstandsmessung zwischen den Fahrzeugen basiert. Das Verfahren umfasst die folgenden Schritte: Sammeln und Verfolgen der Satellitensignale durch die GNSS-Empfänger auf allen Fahrzeugen, um die beobachtete GNSS-Menge zu erhalten, und Erhalten der relativen Abstandsinformationen zwischen den Fahrzeugen durch ein relatives Abstandsmessungsmodul; Senden und Zusammenfassen der Navigationsinformationen jedes unbemannten Luftfahrzeugs durch ein Kommunikationsmodul zwischen den Fahrzeugen, und Unterstützen der GNSS-Relativdifferenz, um eine Basislinie zwischen den unbemannten Luftfahrzeugen durch Verwendung der relativen Abstandsinformationen zwischen den Fahrzeugen zu schätzen; Nehmen eines unbemannten Luftfahrzeugs als Referenz, Erfassen der Position jedes unbemannten Luftfahrzeugs relativ zu der Referenz unter Verwendung eines relativen Positionsvektors und Integrieren der Position mit der beobachteten GNSS-Größe in die relative Navigationsinformation; Auswählen eines anderen unbemannten Luftfahrzeugs mit Ausnahme der Referenz und Lösen der Position des unbemannten Luftfahrzeugs relativ zur Referenz, um die ursprüngliche Basislinienlösung unter Verwendung der relativen Navigationsinformationen in Bezug auf das unbemannte Luftfahrzeug und die Referenz in einer unbemannten Luftfahrzeugformation zu optimieren; und Optimieren der Basislinienlösungen mit schlechterer Präzision in Folge unter Verwendung der vorhandenen Basislinienlösungen und der Messgröße, bis jede Basislinienlösung in der Formation konvergiert ist, wodurch die kooperative relative Navigation mit mehreren unbemannten Luftfahrzeugen abgeschlossen wird.

FR 2 632 755 A1 beschreibt ein System zum Unterstützen der Bewegung von mobilen Einheiten in einer Formation. Das System ermöglicht es, einen Flug in einer Gruppenformation durchzuführen. Jede mobile Einheit ist mit Sensoren und Rechenmitteln ausgestattet, die es ermöglichen, die Flugparameter und -daten einschließlich der absoluten Position, der Geschwindigkeit, der Höhe und der Lage einer mobilen Einheit E1 zu messen. Jede mobile Einheit ist darüber hinaus mit einem Sender-Empfänger ausgestattet, um die Daten an die anderen mobilen Einheiten E2 bis EN, Lj, Sj der Formation zu senden und um dieselben Daten zu empfangen, die diesen anderen mobilen Einheiten entsprechen, und mit einem Rechner, der die Daten nach einem definierten Verfahren zusammenführt, um die relativen Positionen der mobilen Einheiten zu berechnen und um die Steuerbefehle für die Echtzeitkorrektur der Flugbahn der mobilen Einheit abzuleiten.

Li, Hao; Nashashibi, Fawzi: Cooperative multi-vehicle localization using split covariance intersection filter. In: IEEE Intelligent transportation systems magazine, Vol. 5, 2013, No. 2, S. 33-44, beschreibt einen Ansatz für das Lokalisieren von Fahrzeugen in einer Umgebung vernetzter Fahrzeuge. Jedes Fahrzeug nimmt eine Positionsschätzung vor und teilt diese Schätzung mit benachbarten Fahrzeugen. Für das Aktualisieren der Positionsschätzung einer Gruppe wird ein Eigenwert eines Fahrzeugs sowie die Schätzungen der benachbarten Fahrzeuge verwendet.

Fuji, Sae (et al.): Cooperative vehicle positioning via V2V communications and onboard sensors. In: 2011 IEEE vehicular technology conference (VTC Fall). IEEE, 2011, S. 1-5, beschreibt einen Ansatz, in welchem mehrere Fahrzeuge in einem kooperativen Verfahren Daten austauschen, um die Position von umgebenden Fahrzeugen zu ermitteln.

Beschreibung

Es kann als Aufgabe betrachtet werden, die Genauigkeit einer relativen und absoluten Zustandsbestimmung von Objekten in einem Verbund von Objekten zu erhöhen, beziehungsweise eine in sich konsistente - bezüglich der erfassten relativen Zustandswerte - absolute Zustandsbestimmung von Objekten zu ermitteln.

Diese Aufgabe wird gelöst durch den Gegenstand der unabhängigen Ansprüche. Weitere Ausführungsformen ergeben sich aus den abhängigen Ansprüchen sowie aus der folgenden Beschreibung.

Gemäß der Erfindung ist ein Verfahren zum Ermitteln eines Korrekturwertes eines Zustands eines Objekts angegeben. Das Objekt ist Teil eines Verbunds bestehend aus mehreren Objekten. Das Verfahren weist die folgenden Schritte auf: Erfassen, durch jedes Objekt des Verbunds, eines absoluten eigenen Zustands in einem bestehenden Koordinatensystem; Erfassen, durch ein erstes Objekt des Verbunds, eines relativen Zustands des ersten Objekts zu einem oder mehreren anderen Objekten des Verbunds; Übermitteln, durch das erste Objekt, des erfassten relativen Zustands und des erfassten absoluten eigenen Zustands über eine Datenverbindung an eines oder mehrere der anderen Objekte des Verbunds; Austauschen von erfassten relativen Zuständen und erfassten absoluten Zuständen in dem Verbund von Objekten, so dass alle Objekte einen gleichen einheitlichen Informationsstand haben; Berechnen eines Korrekturwertes durch jedes Objekt für alle Objekte des Verbunds basierend auf dem einheitlichen Informationsstand; und Anwenden, durch ein Objekt, des eigenen Korrekturwertes auf den eigenen erfassten absoluten Zustand. Der Korrekturwert $\delta x_i$ wird derart berechnet, dass daraus resultierende neue absolute Zustandswerte $x_{new,i}$, die sich gemäß $x_{new,i} = x_{old,i} + \delta x_i$ aus einem alten Zustandswert $x_{old,i}$ und einem Korrekturwert $\delta x_i$ ergeben, relative Zustandswerte $\breve{z}_{ij}$ eines ersten Objektes i zu einem zweiten Objekt j und damit eine relative Konstellation der Objekte des Verbunds bezüglich der absoluten Zustandswerte durch Anwendung der folgenden Gleichung rekonstruieren:

$$\breve{z}_{ij} = h\left(\left(x_{old,j} + \delta x_j\right) - \left(x_{old,i} + \delta x_i\right)\right) \text{ (Gl. 1)}$$

wobei h eine Funktion ist, welche aus einer Differenz der absoluten Zustände der Objekte i und j die relativen Zustandswerte $\breve{z}_{ij}$ berechnet;

wobei Gl. 1 für alle im Verbund erfassten relativen Zustandswerte aufgestellt wird, wodurch sich ein Gleichungssystem ergibt, welches zum Ermitteln der Korrekturwerte $\delta x_i$ gelöst wird und durch das Gleichungssystem alle Korrekturwerte $\delta x_i$ miteinander gekoppelt sind und nur gesamtheitlich gelöst werden können, wobei alle absoluten und relativen Zustandswerte und gegebenenfalls dazugehörigen Kovarianzen übertragen werden müssen, um einen gleichen einheitlichen Informationsstand für alle Objekte des Verbunds zu schaffen;

wobei als erste Randbedingung gilt, dass eine gewichtete Summe der Korrekturwerte Null ergibt, gemäß

$$W_Q^{-1} \sum_{i=1}^{n} Q_i^{-1} \delta x_i = 0 \text{ (Gl. 2)};$$

wobei n die Anzahl der Objekte im Verbund repräsentiert, $W_Q$ die Normierung mit $W_Q = \sum_{i=1}^{n} Q_i^{-1}$ darstellt und als Gewichtung die Inverse der Kovarianz des Korrekturwertes $Q_i^{-1}$ gewählt wird;

wobei der Gl. 1 eine zweite Randbedingung hinzugefügt wird, welche die gewichteten Abstände zwischen den alten und neuen absoluten Zuständen beschränkt;

wobei die in der ersten Randbedingung herangezogene Kovarianz des Korrekturwertes $Q_i$ über Gl. 3 gelöst wird, die sich aus einer linearisierten Form der Gl. 1 ergibt:

$$H_{ij} \underbrace{Var\big(\delta x_j - \delta x_i\big)}_{Q_i + Q_j - 2Cov(Q_i, Q_j)} H_{ij}{}^T = Var\left(\check{z}_{ij} - h\big(x_{old,j} - x_{old,i}\big)\right) \text{ (Gl. 3),}$$

$$H_{ij} = \left.\frac{\partial h(x)}{\partial x}\right|_{x = x_j - x_i} ;$$

wobei

wobei eine dritte Randbedingung eingeführt wird, wonach die Summe der gewichteten Kovarianzen der Korrekturwerte eine sphärische Ellipse darstellt, welche die Optimalität der Lösung gemäß

$$Var\big(W_Q^{-1} \textstyle\sum_{i=1}^{n} Q_i^{-1} \delta x_i\big) = W_Q^{-1} \sum_{i=1}^{n} Q_i^{-1} \underbrace{Var(\delta x_i)}_{Q_i} Q_i^{-T} = I$$

widerspiegelt,

wobei $Q_i$ mit der Kovarianz des alten Zustandes approximiert wird oder das Gleichungssystem durch iterative Verfahren gelöst wird.

Das Verfahren kann angewendet werden, um Korrekturwerte für einen Zustandswert für eine Gruppe von Objekten zu ermitteln. Die Gruppe von Objekten entspricht einer Mehrzahl von Objekten. Die Gruppe von Objekten kann mobile und stationäre Objekte enthalten, nur aus mobilen Objekten bestehen oder nur aus stationären Objekten bestehen.

Eine nur aus mobilen Objekten bestehende Gruppe kann beispielsweise eine Gruppe umfassende mehrere Fahrzeuge, z.B. Landfahrzeuge oder Luftfahrzeuge, sein.

Eine nur aus stationären Objekten bestehende Gruppe ist beispielsweise eine Gruppe aus signaltechnischen Leuchttürmen (Engl.: beacon), welche in der Nähe einer Landebahn aufgestellt sind und ein Signal aussenden, um das Navigieren von Fahrzeugen bzw. den Landeanflug von Luftfahrzeugen zu unterstützen. Dieser Ansatz kann beispielsweise verwendet werden, um das Einmessen einer Gruppe von stationären Bodenradareinheiten zu unterstützen.

Die Gruppe von Objekten stellt einen Verbund von Objekten dar. Die mobilen Objekte sind beispielsweise Fahrzeuge, wie Luftfahrzeuge oder Landfahrzeuge, welche sich im Verbund bewegen. Beim Verbund ist eine konsistente absolute Zustandsermittlung der einzelnen Objekte angestrebt, sodass die von der absoluten Zustandsermittlung abgeleitete relative Genauigkeit möglichst genau ist.

Der absolute eigene Zustand wird durch jedes Objekt erfasst. Unter dem Erfassen des absoluten eigenen Zustands ist zu verstehen, dass Sensorwerte und/oder Datenwerte (beispielsweise Datenwerte, welche über eine Datenverbindung empfangen werden oder aus einem Speicher ausgelesen werden, wobei letztere Werte einem Standardwert oder Initialisierungswert entsprechen können) herangezogen und verwendet werden, um den absoluten eigenen Zustand zu ermitteln, wobei es auf die Quelle der herangezogenen und verwendeten Werte sowie gegebenenfalls angewandte Verarbeitungsschritte auf diese Werte nicht ankommt. Die für die Erfassung des absoluten eigenen Zustands verwendeten Werte können Messwerte (z.B. Sensorwerte) oder über eine Datenverbindung empfangene Werte oder beliebige Werte wie ein Initialisierungswert sein. Die Werte können als Rohdaten vorliegen und verwendet werden oder zunächst einem oder mehreren Verarbeitungsschritt unterliegen, welcher der Verwendung für die Ermittlung des absoluten eigenen Zustands vorgelagert ist. Dieser absolute Zustand wird in einem externen Koordinatensystem erfasst, beispielsweise unter Rückgriff auf Navigationssatelliten und in einem globalen Koordinatensystem. Der absolute Zustand kann Informationen enthalten wie beispielsweise Position, Geschwindigkeit, Lage, etc.

Der relative Zustand wird von einem, mehreren oder allen Objekten bezogen auf ein anderes, mehrere andere oder alle anderen Objekte in dem Verbund von Objekten erfasst und kann mit optischen, akustischen oder elektromagnetischen Erfassungseinheiten durchgeführt werden, z.B. über eine optische Kamera, eine Wärmebildkamera, einen Ultraschallsensor, ein Radar-System, ein Lidar-System, etc. Der relative Zustand zeigt an, wie der Zustand eines Objektes bezogen auf ein anderes Objekt ist. Allgemein ausgedrückt wird der relative Zustand basierend auf Messwerten und/oder empfangenen Datenwerten ermittelt.

Der relative Zustand und der absolute Zustand werden zwischen den Objekten des Verbunds bevorzugt über eine drahtlose Verbindung übertragen. Für diese Zwecke können mehrere exklusive Verbindungen jeweils zwischen zwei Objekten aufgebaut werden. Es ist aber auch denkbar, dass die Objekte des Verbunds in einem Rundruf-Verfahren (einer an mehrere oder einer an alle) Daten für die anderen Objekte bereitstellen.

Ein Gleichungssystem zum Ermitteln des Korrekturwertes wird durch jedes Objekt ausgeführt. Jedes Objekt ermittelt mit Hilfe des Gleichungssystems den Korrekturwert des Zustands für jedes andere Objekt des Verbunds. Es wird jedoch nur der eigene Korrekturwert zum Korrigieren eines eigenen absoluten Zustandswertes angewandt.

Der Korrekturwert ist ein Wert, welcher auf den absoluten eigenen Zustand angewandt wird, beispielsweise indem der Korrekturwert zu dem absoluten eigenen Zustand addiert wird, oder der absolute eigene Zustand mit einem Faktor multipliziert wird, oder der absolute eigene Zustand durch einen neuen absoluten Zustand ersetzt wird.

Alternativ ist denkbar, dass ein Objekt oder eine zentrale Einheit, die nicht dem Verbund angehören muss, jedoch über eine Datenverbindung zu dem Verbund und jedem einzelnen Mitglied des Verbunds verfügt, eine Master-Rolle einnimmt. An diese zentrale Einheit werden sämtliche Werte (erfasste absolute Zustandswerte, von den Objekten erfasste relative Zustandswerte, etc.) übertragen. Die zentrale Einheit löst das Gleichungssystem und überträgt die individuellen Korrekturwerte per Datenverbindung an die einzelnen Objekte.

Wenn ein mobiles Objekt einen ihm zugewiesenen Bewegungskorridor unter Berücksichtigung von Unsicherheiten der Zustandswerte nicht verlassen hat und vorgegebene Minimalabstände zu anderen Objekten nicht unterschritten worden sind, kann ein Steuerungssystem basierend alleine auf den korrigierten Zustandswerten seine Funktion ausführen. Es besteht in diesem Fall keine Notwendigkeit, abgeleitete relative Zustandswerte heranzuziehen.

Der hier beschriebene Ansatz bildet also ein Verfahren zur konsistenten absoluten Zustandsermittlung von mehreren Objekten (und ferner dadurch zur abgeleiteten relativen Zustandsermittlung bezüglich der anderen Objekte) in einem Verbund bestehend aus einer Mehrzahl von Objekten, welche ausgestaltet sind, in einem Verbund aus Objekten einen Korrekturwert für den eigenen absoluten Zustand zu ermitteln. Das Verfahren ermöglicht unter der Voraussetzung, dass alle Fahrzeuge in einem individuellen Bewegungskorridor unter Berücksichtigung der Unsicherheit der eigenen absoluten Zustandswerte verbleiben, eine Regelung der sich in Formation bewegenden Fahrzeuge nur basierend auf den eigenen absoluten Zustandswerten, da diese absoluten Zustandswerte der Mitglieder des Verbunds konsistent zueinander sind und daher ein relativer Zustand redundant dazu ist.

Gemäß einer Ausführungsform wird neben den erfassten relativen Zuständen und den erfassten absoluten Zuständen auch eine zu jedem Zustandswert gehörige Kovarianz ausgetauscht.

Alternativ kann die zu einem Zustandswert gehörige Kovarianz von den empfangenden Mitgliedern (den Objekten des Verbunds oder der zentralen Einheit) geschätzt werden, so dass diese nicht übertragen werden muss.

Gemäß einer weiteren Ausführungsform werden die Korrekturwerte derart berechnet, so dass der absolute Zustandsfehler des Verbunds von Objekten minimiert wird.

Gemäß einer weiteren Ausführungsform wird der Korrekturwert in einem Filter mindestens eines Objekts verwendet, um einen Zustandswert dieses Objekts zu korrigieren.

Der Zustandswert ist eine Abbildung oder Darstellung des Zustands eines Objekts. Der Zustandswert kann eine Mehrzahl von Einzelwerten enthalten, so dass die Gesamtheit der Einzelwerte eine Vielzahl von Einzelinformationen darstellt und den gesamten relevanten Zustand eines Objekts beschreibt. Der Korrekturwert wird also lokal in einem Objekt verwendet, um den eigenen Zustandswert dieses Objekts zu korrigieren.

Insbesondere korrigieren alle Mitglieder des Verbunds ihre Zustandswerte an Hand der Korrekturwerte gleichzeitig, um Inkonsistenzen bis zu dem Zeitpunkt, zu dem alle Mitglieder die Korrektur vorgenommen haben, zu vermeiden.

Das hier verwendete Filter kann beispielsweise ein Kalman-Filter sein. Andere geeignete Filter können verwendet werden.

Unter einer gleichzeitigen Korrektur der Zustandswerte ist zu verstehen, dass die Korrekturwerte durch alle Mitglieder innerhalb einer vorgegebenen Zeitspanne korrigiert werden oder die Korrektur innerhalb einer deterministischen Anzahl von Arbeitszyklen vorgenommen wird.

Gemäß einer weiteren Ausführungsform enthält ein Zustandswert des absoluten Zustands und/oder des relativen Zustands Informationen zu einem oder mehreren der folgenden Parameter eines Objekts: Position, Geschwindigkeit, Lage, Beschleunigung, Drehrate, relative Position, relativer Abstand zu einem oder mehreren anderen Objekten, relative Geschwindigkeit zu einem oder mehreren anderen Objekten, relative Lage zu einem oder mehreren anderen Objekten.

Beispielsweise kann eine optische Kamera verwendet werden, um die relative Position zu anderen Objekten zu erfassen, indem Azimut und Elevation ermittelt und herangezogen werden.

Gemäß der Erfindung wird ein Korrekturwert derart berechnet, dass daraus resultierende neue absolute Zustandswerte die erfassten relativen Zustandswerte eines ersten Objektes i zu einem zweiten Objekt j und damit eine relative Geometrie der Objekte des Verbunds bezüglich der absoluten Zustandswerte durch Anwendung der folgenden Gleichung rekonstruieren:

$$\check{z}_{ij} = h\left(\left(x_{old,j} + \delta x_j\right) - \left(x_{old,i} + \delta x_i\right)\right)$$

wobei $\delta x_i$ Korrekturwerte sind, die derart berechnet werden, dass die daraus resultierenden neuen absoluten Zustände $x_{new,i} = x_{old,i} + \delta x_i$) die erfassten relativen Zustandswerte $\check{z}_{ij}$ von Objekt i zu Objekt j, und damit die relative Geometrie des Verbunds, rekonstruieren.

Gemäß der Erfindung gilt als Randbedingung, dass eine Summe der Korrekturwerte Null ergibt.

Bei der Summe der Korrekturwerte kann es sich um eine einfache Summe der Korrekturwerte handeln. Alternativ können bei der Summe die Korrekturwerte anhand der Inversen der Kovarianz der Korrekturwerte gewichtet werden.

Gemäß der Erfindung ist ein Verfahren zum Ermitteln eines Korrekturwertes eines absoluten Zustands eines Objekts in einem Verbund bestehend aus mehreren Objekten angegeben. Das Verfahren umfasst die folgenden Schritte: Erfassen, durch jedes Objekt des Verbunds, eines absoluten eigenen Zustands in einem bestehenden Koordinatensystem; Erfassen, durch ein erstes Objekt des Verbunds, eines relativen Zustands des ersten Objekts zu einem oder mehreren anderen Objekten des Verbunds; Übermitteln, durch das erste Objekt, des erfassten relativen Zustands und des erfassten absoluten eigenen Zustands über eine Datenverbindung an eine zentrale Einheit, so dass die zentrale Einheit sämtliche erfassten absoluten und relativen Zustände der Objekte des Verbunds enthält; Berechnen eines Korrekturwertes für den Zustand jedes Objekts des Verbunds durch die zentrale Einheit basierend auf den absoluten und relativen Zuständen aller Objekte des Verbunds; Übermitteln der Korrekturwerte an das jeweilige Objekt des Verbunds; Anwenden, durch jedes Objekt des Verbunds, des eigenen Korrekturwertes auf den eigenen erfassten absoluten Zustand. Der Korrekturwert $\delta x_i$ wird derart berechnet, dass daraus resultierende neue absolute Zustandswerte $x_{new,i}$, die sich gemäß $x_{new,i} = x_{oLd,i} + \delta x_i$ aus einem alten Zustandswert $x_{old,i}$ und einem Korrekturwert $\delta x_i$ ergeben, relative Zustandswerte $\check{z}_{ij}$ eines ersten Objektes i zu einem zweiten Objekt j und damit eine relative Konstellation der Objekte des Verbunds bezüglich der absoluten Zustandswerte durch Anwendung der folgenden Gleichung rekonstruieren:

$$\check{z}_{ij} = h\left(\left(x_{old,j} + \delta x_j\right) - \left(x_{old,i} + \delta x_i\right)\right) \text{ (Gl. 1)}$$

wobei h eine Funktion ist, welche aus einer Differenz der absoluten Zustände der Objekte i und j die relativen Zustandswerte $\check{z}_{ij}$ berechnet;

wobei Gl. 1 für alle im Verbund erfassten relativen Zustandswerte aufgestellt wird, wodurch sich ein Gleichungssystem ergibt, welches zum Ermitteln der Korrekturwerte $\delta x_i$ gelöst wird und durch das Gleichungssystem alle Korrekturwerte $\delta x_i$ miteinander gekoppelt sind und nur gesamtheitlich gelöst werden können, wobei alle absoluten und relative Zustandswerte und gegebenenfalls dazugehörigen Kovarianzen übertragen werden müssen, um der zentralen Einheit einen gleichen einheitlichen Informationsstand zur Verfügung zu stellen;

wobei als erste Randbedingung gilt, dass eine gewichtete Summe der Korrekturwerte Null ergibt, gemäß

$$W_Q^{-1} \sum_{i=1}^{n} Q_i^{-1} \delta x_i = 0 \text{ (Gl. 2)};$$

wobei n die Anzahl der Objekte im Verbund repräsentiert, $W_Q$ die Normierung mit $W_Q = \sum_{i=1}^{n} Q_i^{-1}$ darstellt und als Gewichtung die Inverse der Kovarianz des Korrekturwertes $Q_i^{-1}$ gewählt wird;

wobei der Gl. 1 eine zweite Randbedingung hinzugefügt wird, welche die gewichteten Abstände zwischen den alten und neuen absoluten Zuständen beschränkt;

wobei die in der ersten Randbedingung herangezogene Kovarianz des Korrekturwertes $Q_i$ über Gl. 3 gelöst wird, die sich aus einer linearisierten Form der Gl. 1 ergibt:

$$H_{ij} \underbrace{Var\left(\delta x_j - \delta x_i\right)}_{Q_i + Q_j - 2Cov(Q_i,Q_j)} H_{ij}^T = Var\left(\check{z}_{ij} - h\left(x_{old,j} - x_{old,i}\right)\right) \text{ (Gl. 3)},$$

wobei $H_{ij} = \frac{\partial h(x)}{\partial x}\bigg|_{x=x_j-x_i}$ ;

wobei eine dritte Randbedingung eingeführt wird, wonach die Summe der gewichteten Kovarianzen der Korrekturwerte eine sphärische Ellipse darstellt, welche die Optimalität der Lösung gemäß

$$Var\left(W_Q^{-1} \sum_{i=1}^{n} Q_i^{-1} \delta x_i\right) = W_Q^{-1} \sum_{i=1}^{n} Q_i^{-1} \underbrace{Var(\delta x_i)}_{Q_i} Q_i^{-T} = I$$

widerspiegelt,

wobei $Q_i$ mit der Kovarianz des alten Zustandes approximiert wird oder das Gleichungssystem durch iterative Verfahren gelöst wird.

Das Verfahren gemäß diesem Aspekt entspricht dem Verfahren wie oben beschrieben mit dem Unterschied, dass der Korrekturwert nicht durch die einzelnen Mitglieder des Verbunds ermittelt wird, sondern durch eine zentrale Einheit, welche eine Master-Rolle einnimmt. Die zentrale Einheit kann dabei selbst ein Mitglied des Verbunds sein oder sie kann nur über eine Datenverbindung zum Verbund verfügen, aber sie selbst ist kein Mitglied des Verbunds.

Allgemein führt die zentrale Einheit zum Ermitteln des Korrekturwertes dieselben Schritte durch wie oben mit Bezug zu der ersten Variante des Verfahrens beschrieben. Der Unterschied ist, dass in dieser Variante des Verfahrens die Berechnung nicht dezentral, sondern zentral und an einer Stelle ausgeführt wird, und dann die Mitglieder des Verbunds mit den entsprechenden Korrekturwerten versorgt werden.

Die oben mit Bezug zu der ersten Variante des Verfahrens beschriebenen Merkmale gelten in analoger Weise auch für diese zweite Variante des Verfahrens, auch ohne dass die besagten Merkmale an dieser Stelle wiederholt werden.

Gemäß einem weiteren Aspekt ist ein Fahrzeug angegeben. Das Fahrzeug weist eine Erfassungseinheit, eine erste Filtereinheit, eine zweite Filtereinheit und eine Überwachungseinheit auf. Die Erfassungseinheit ist ausgestaltet, absolute und relative Zustandswerte des Fahrzeugs zu erfassen, wobei die Erfassungseinheit einen oder mehrere Sensoren zum Bestimmen eines absoluten und eines relativen Zustands aufweist, und wobei die Erfassungseinheit eine Datenschnittstelle aufweist, welche ausgestaltet ist, eigene relative und absolute Zustandswerte zu übermitteln und relative und absolute Zustandswerte von Objekten eines Verbunds zu erhalten Die erste Filtereinheit ist ausgestaltet, die von der Erfassungseinheit erfassten absoluten und relativen Zustandswerte zu verarbeiten, um einen korrigierten absoluten Zustandswert und einen korrigierten relativen Zustandswert des Fahrzeugs bezüglich anderer Objekte in dem Verbund mit dem Verfahren nach einem der oben beschriebenen Ausführungsformen zu ermitteln. Beim Ermitteln der korrigierten absoluten und relativen Zustandswerte wird insbesondere ein Korrekturwert herangezogen, welcher mit Hilfe einer Recheneinheit für Korrekturwertberechnung basierend auf absoluten Zustandswerten und relativen Zustandswerten zu anderen Objekten ermittelt wurde. Die zweite Filtereinheit ist ausgestaltet, die von der Erfassungseinheit erfassten absoluten und relativen Zustandswerte zu verarbeiten, um einen relativen Zustandswert zu anderen Fahrzeugen als Ausgabewert zu ermitteln. Die Überwachungseinheit ist ausgestaltet, einen Status der ersten Filtereinheit und der zweiten Filtereinheit zu überwachen. Die Überwachungseinheit ist ausgestaltet, den korrigierten absoluten Zustandswert und den korrigierten relativen Zustandswert von der ersten Filtereinheit weiterzuleiten, wenn für die erste Filtereinheit ein normaler Betriebszustand festgestellt wurde, andernfalls für den relativen Zustandswert den Ausgabewert von der zweiten Filtereinheit weiterzuleiten, wenn für die erste Filtereinheit ein fehlerhafter Betriebszustand festgestellt wurde.

Es ist auch denkbar, dass die Überwachungseinheit den Ausgabewert der zweiten Filtereinheit statt der korrigierten Zustandswerte der ersten Filtereinheit weiterleitet, wenn eine geschätzte relative Genauigkeit der zweiten Filtereinheit besser ist als die geschätzte relative Genauigkeit der ersten Filtereinheit.

Das Fahrzeug erhält Zustandswerte von mobilen Objekten (Fahrzeugen, z.B. Landfahrzeugen oder Luftfahrzeugen) oder von stationären Objekten, welche zusammen mit dem Fahrzeug einen Verbund bilden, so dass das Fahrzeug die relativen und absoluten Zustandswerte von anderen Objekten kennt, um diese Zustandswerte in die Berechnung des Korrekturwertes einfließen zu lassen.

Gemäß einer Ausführungsform ist die Überwachungseinheit ausgestaltet, den Status der ersten Filtereinheit als fehlerhaften Betriebszustand einzuordnen, wenn über die Datenschnittstelle der Erfassungseinheit keine Datenverbindung aufgebaut ist.

Der Ausgabewert der ersten Filtereinheit wird nur dann verwendet, d.h. von der Überwachungseinheit weitergeleitet, wenn die erste Filtereinheit fehlerfrei funktioniert und auch relative Zustandswerte und absolute Zustandswerte von anderen Objekten empfängt. Andernfalls werden die relativen Zustandswerte von der zweiten Filtereinheit weitergeleitet, wobei die zweite Filtereinheit so ausgestaltet ist, dass für die Ermittlung der relativen Zustandswerte Daten ausreichend sind, die von der eigenen Plattform erfasst werden, d.h. dass relative Zustandswerte und absolute Zustandswerte von anderen Plattformen (Objekten) nicht herangezogen werden müssen, um einen relativen Zustandswert zu ermitteln.

Gemäß einer Ausführungsform ist das Fahrzeug ein Luftfahrzeug.

Bei dem Luftfahrzeug kann es sich um ein bemanntes oder unbemanntes Luftfahrzeug handeln, insbesondere um ein solches Luftfahrzeug, welches zum Ausführen einer wie auch immer gearteten Mission in einem Verbund mit mehreren anderen Luftfahrzeugen eingesetzt wird.

Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:

**Fig. 1** eine schematische Darstellung der Schritte eines Verfahrens gemäß einem Ausführungsbeispiel.

**Fig. 2** eine schematische Darstellung der funktionalen Module eines Fahrzeugs gemäß einem weiteren Ausführungsbeispiel.

**Fig. 3** eine schematische Darstellung der Schritte zum Berechnen eines Korrekturwertes für einen Fahrzeugzustand in einem Fahrzeugverbund gemäß einem weiteren Ausführungsbeispiel.

Detaillierte Beschreibung von Ausführungsbeispielen

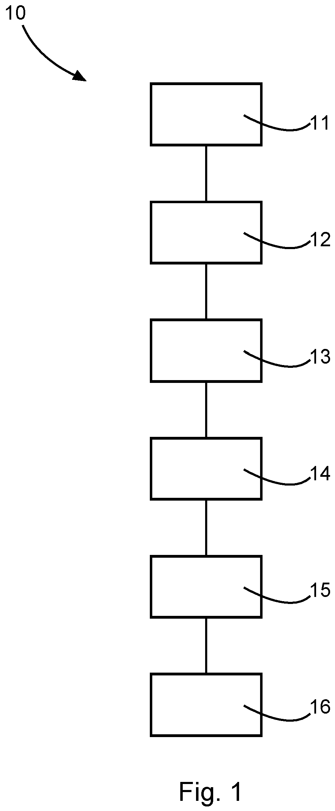

Fig. 1 zeigt schematisch die Schritte eines Verfahrens zum Ermitteln eines Korrekturwertes eines Zustands eines Objekts in einem Verbund bestehend aus mehreren Objekten.

In einem ersten Schritt 11 wird durch jedes Objekt des Verbunds ein absoluter eigener Zustandswert in einem bestehenden Koordinatensystem erfasst. In einem weiteren Schritt 12 wird durch ein erstes Objekt des Verbunds der relative Zustand dieses ersten Objekts zu einem oder mehreren anderen Objekten des Verbunds erfasst. In einem weiteren Schritt 13 werden der erfasste relative Zustand und der eigene absolute Zustand durch das erste Objekt über eine Datenverbindung an eines oder mehrere der anderen Objekte des Verbunds übermittelt. In einem weiteren Schritt 14 erfolgt ein Austausch von erfassten relativen Zuständen in dem Verbund von Objekten, so dass alle Objekte einen gleichen einheitlichen Informationsstand haben. In einem weiteren Schritt 15 wird ein Korrekturwert durch jedes Objekt für alle Objekte des Verbunds basierend auf dem gleichen einheitlichen Informationsstand berechnet. In einem weiteren Schritt 16 wird durch ein Objekt der eigene Korrekturwert auf den eigenen erfassten absoluten Zustand angewendet.

Somit liefert das Verfahren einen Korrekturwert für den eigenen absoluten Zustandswert, um eine im Verbund konsistente absolute Zustandsschätzung zu erreichen. Darüber hinaus wird durch das Verfahren der Fehler der absoluten Zustandswerte Verbunds gesamtheitlich minimiert.

Der Zustand eines Objektes kann sich insbesondere auf die Geschwindigkeit und die Position eines Objektes, wie z.B. eines Landfahrzeugs, eines Wasserfahrzeugs oder eines Luftfahrzeugs, beziehen. Dabei enthält der absolute Zustand Informationen über die Position, Geschwindigkeit, Lage, etc., der relative Zustand Informationen über die relative Position, den relativen Abstand, die relative Geschwindigkeit und relative Lage zu anderen Objekten, etc.

Gerade wenn sich mehrere Fahrzeuge in einem Verbund bewegen, ist eine absolute Zustandsbestimmung der Fahrzeuge mit einer möglichst hohen relativen Genauigkeit hilfreich, von welchen wiederum die relativen Zustände abgeleitet werden können. Die erfassten relativen Zustandswerte werden dazu mit den absoluten Zustandswerten verarbeitet, um einen Korrekturwert zu erhalten, der mittels eines Filters oder einer Prädiktor-Korrektur-Methode angewendet wird, um den absoluten Zustandswert zu korrigieren.

Der absolute Zustand kann mit Hilfe von einem oder mehreren Navigationsverfahren in einem Filter geschätzt werden. Beispielsweise kann auf Satellitennavigationsverfahren zurückgegriffen werden, wie beispielsweise GPS, GLONASS, Beidou, Galileo, welche unter dem Oberbegriff globales Navigationssatellitensystem, GNSS, zusammengefasst werden können. Andere Navigationsverfahren, die hier genutzt werden können, sind beispielsweise eine Trägheitsnavigation oder umgebungskorrelierende Navigationsverfahren, wie beispielsweise Terrain Referenced Navigation, TRN. Die Trägheitsnavigationsanlage gibt einen Zustand des Fahrzeugs aus und wird typischerweise mit GNSS-Navigationsverfahren fusioniert, wobei die Trägheitsnavigationsanlage die Zustandswerte mit einer höheren Aktualisierungsrate und einem geringeren Rauschen bereitstellt, als ein GNSS-Verfahren dies zu liefern vermag. Die Positions-, Geschwindigkeits- und Lagelösung einer Trägheitsnavigationsanlage weist einen sogenannten Drift auf, d.h. die ausgegebene Lösung degradiert mit der Zeit, was in der Natur des Trägheitsnavigationsverfahrens liegt, und somit einer Korrektur bedarf. Auch GNSS-Navigationsverfahren beinhalten Messfehler, die ggf. einer Korrektur bedürfen.

Um einen geeigneten Korrekturwert zu ermitteln, erfasst mindestens ein Objekt des Objektverbundes den relativen Zustand bezogen auf andere Objekte im Verbund und liefert diesen relativen Zustand zusammen mit dem eigenen absoluten Zustand sowie die zugehörigen Kovarianzen für die erfassten absolute und relative Zustandswerte über eine Datenverbindung an einige oder alle anderen Objekte des Verbunds. In diesem Zusammenhang kann auch ein Zeitstempel für die einzelnen Zustandswerte verwendet werden, was auch eine globale Zeitsynchronisation zwischen den Mitgliedern des Verbunds erforderlich macht, beispielsweise durch hochgenaue Uhren, die initial oder fortlaufend synchronisiert werden. Zwischen den Mitgliedern des Verbunds gibt es einen wiederkehrenden Austausch von Messwerten. Die Gesamtheit der absoluten und relativen Zustandswerte und ferner der dazugehörigen Kovarianzen wird dann genutzt, um für die Objekte des Verbunds jeweils einen Korrekturwert zu ermitteln. Es ist erforderlich, dass alle Objekte im Verbund die Ermittlung des Korrekturwerts bzw. der Korrekturwerte basierend auf dem gleichen einheitlichen Informationsstand ausführen. Der zu dem eigenen Objekt gehörige Korrekturwert wird mittels eines Filters oder einer Prädiktor-Korrektur-Methode angewandt, um den eigenen Zustandswert zu korrigieren.

Der hier beschriebene Ansatz ermöglicht es, dass die absoluten Zustandsermittlungen der Objekte im Verbund zueinander konsistent sind, sodass die relativen Zustände bis auf ein Fehlerresiduum rekonstruiert werden und damit die ermittelten Zustände der Objekte die physikalische, tatsächliche relative Geometrie möglichst genau widerspiegelt, wobei der hier verwendete Begriff Geometrie nicht auf die Positionsdomäne beschränkt ist, sondern auch Geschwindigkeit, Lage, etc. umfasst. Wenn sowohl ein Zugriff auf GNSS als auch die Datenverbindung zwischen den Objekten des Verbunds verfügbar ist, die zugleich absolute Zustandswerte und relative Zustandswerte bereitstellen, bietet dies die beste absolute und zugleich relative Genauigkeit der Zustandswerte. Ist kein drift-freies absolutes Navigationsverfahren verfügbar, aber die Datenverbindung zwischen den Objekten besteht, können zumindest nach wie vor die absoluten Zustände konsistent ermitteln werden, sodass die relative Genauigkeit bezüglich der ermittelten absoluten Zustände erhalten bleibt, obgleich die absoluten Zustandswerte einen Fehler aufweisen können, welcher sogar mit der Zeit anwachsen kann, beispielsweise aufgrund des Drifts einer Trägheitsnavigationsanlage. Hat jedoch mindestens ein Mitglied des Verbunds Zugriff auf ein drift-freies absolutes Navigationsverfahren, z.B. TRN, ist diese Information implizit in der absoluten Zustandsermittlung auf Grund des Filters enthalten und wird damit über die Datenverbindung mit den anderen Mitgliedern des Verbunds ausgetauscht und fließt damit in die Berechnung des Korrekturwertes ein, sodass der Fehler der absoluten Zustandswerte des gesamten Verbunds begrenzt bleibt. Wenn die Datenverbindung ausgefallen ist, aber absolute Navigationsverfahren, wie GNSS und/oder TRN, für die Mitglieder des Verbunds verfügbar sind, kann die Geometrie des Verbunds bezüglich der absoluten Zustandswerte aufrecht erhalten werden, wobei der Betrag des relativen Fehlers geringer ausfällt als die des absoluten Fehlers, da die absoluten Navigationsverfahren der Verbundmitglieder ähnliche, lokale Fehlerbeiträge erfahren, die sich gegenseitig kompensieren - diese Tatsache kann beispielsweise weiter ausgenutzt werden, beispielsweise durch die Verwendung gleicher Navigationssatelliten für GNSS. Wenn sowohl die Datenverbindung als auch GNSS-Daten nicht zur Verfügung stehen aufgrund einer Störungen oder operationellen Gesichtspunkten und auch keine alternativen absoluten Navigationsverfahren den Mitgliedern zur Verfügung stehen, wird die absolute und ferner die abgeleitete relative Zustandsermittlung anhand der Trägheitsnavigationsanlage zunächst aufrecht erhalten, die jedoch mit der Zeit degradiert - ggf. wird durch die Überwachungseinheit auf das zweite Filter umgeschaltet, falls die Degradation des ersten Filters so weit vorangeschritten ist, dass die relative Genauigkeit des zweiten Filters die des ersten Filters übertrifft.

Das hier beschriebene Verfahren nutzt den Gedanken, dass Konsistenz zwischen den ermittelten absoluten Zustandswerten der Mitglieder des Verbunds angestrebt wird, so dass diese absoluten Zustandswerte die erfassten relativen Zustandswerte des Verbunds rekonstruieren. Eingabewerte für die Flugsteuerung sind im Normalfall die absoluten Zustandswerte, solange der vorgesehene (Flug-) Korridor unter Berücksichtigung der Unsicherheit der absoluten Zustände nicht verlassen wird und die Minimalabstände bezüglich der von den absoluten Zuständen abgeleiteten relativen Zuständen nicht unterschritten wird. Andernfalls regelt die Flugsteuerung basierend auf eine ermittelten relativen Zustandswerte, die von den absoluten Zustandswerten abgeleitet wurden oder direkt durch die zweite Filtereinheit ermittelt wurden.

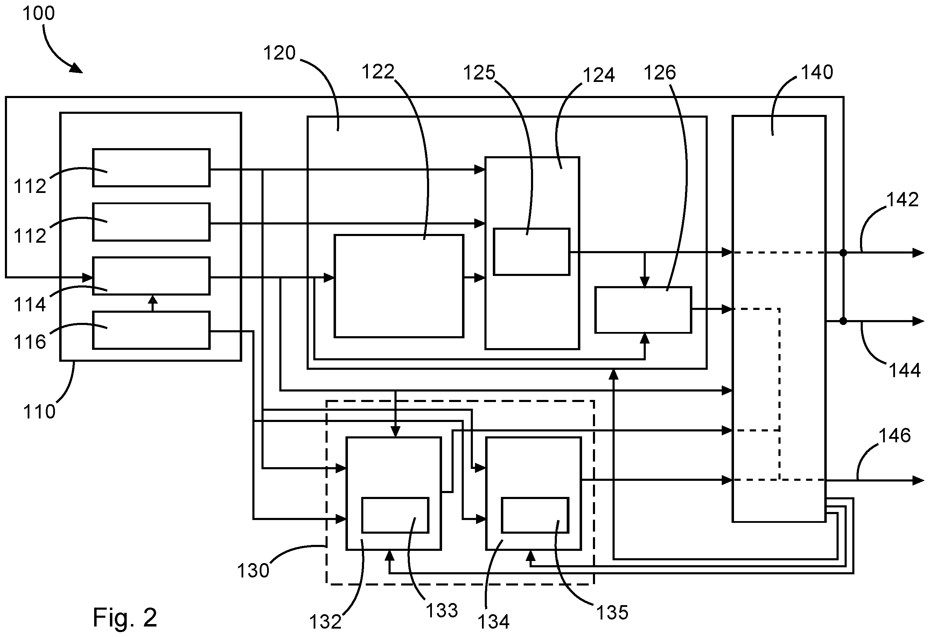

Fig. 2 zeigt den funktionalen Aufbau eines Objekts 100, hier in Form eines Luftfahrzeugs. Es ist zu beachten, dass die Bezugnahme auf ein Luftfahrzeug nicht bedeutet, dass die Beschreibung auf ein Luftfahrzeug beschränkt ist. Vielmehr wird das Luftfahrzeug lediglich als Beispiel herangezogen und die hier beschriebenen Prinzipien gelten für jegliche Art von Fahrzeugen, also auch für Wasserfahrzeuge und Landfahrzeuge, sowie eine Kombination hiervon, gleichermaßen. Unter einem Luftfahrzeug kann ein bemanntes oder unbemanntes Luftfahrzeug verstanden werden. Das Luftfahrzeug kann auch ein Lenkflugkörper eine Rakete, ein ballistisches Objekt sein.

Ein stationäres Objekt kann geringfügig modifiziert werden im Vergleich zu dem in Fig. 2 gezeigten Aufbau. So kann ein stationäres Objekt auf eine zweite Filtereinheit verzichten, und ansonsten einen funktional identischen Aufbau aufweisen.

Das Luftfahrzeug 100 weist eine Erfassungseinheit 110 auf, welche ausgeführt ist, einen Zustand des Luftfahrzeugs zu erfassen und entsprechende Zustandswerte bereitzustellen, sowie eine Datenschnittstelle 114 zum Austausch von absoluten und relativen Zustandswerten und ferner Kovarianzen der absoluten und relativen Zustandswerte. Daneben weist das Luftfahrzeug 100 eine erste Filtereinheit 120 und eine zweite Filtereinheit 130 sowie eine Überwachungseinheit 140 auf.

Die Erfassungseinheit 110 weist eine oder mehrere Einheiten 112 für absolute Navigationsverfahren auf, welche einen absoluten Zustandswert liefern oder fortschreiben. In einem Verbund aus mehreren mobilen Objekten müssen nicht alle mobilen Objekte über eine Einheit 112 für absolute Navigationsverfahren verfügen. Für die Einheit 112 kann unter anderem ein GNSS-Navigationsverfahren und/oder TRN genutzt werden, um einen absoluten Zustandswert zu liefern, und eine Trägheitsnavigationsanlage, welche die Zustandswerte anhand der gemessenen Beschleunigungen und Drehraten des Fahrzeugs fortschreibt.

Weiterhin weist die Erfassungseinheit einen oder mehrere Sensoren 116 auf, welche einen relativen Zustand zu anderen Objekten in dem Verbund ermittelt. In einem Verbund aus mehreren mobilen Objekten müssen nicht alle mobilen Objekte über einen Sensor 116 verfügen. Der Sensor 116 kann optische, akustische oder elektromagnetische Sensoren aufweisen, z.B. eine optische, Kamera und/oder eine Wärmebildkamera und/oder einen Ultraschallsensor und/oder Lidar und/oder Radar und/oder Laufzeitmessung anhand der Datenverbindung. Daneben weist die Erfassungseinheit 110 eine Datenschnittstelle 114 auf, über welche sie die selbst erfassten absoluten Zustandswerte und/oder relative Zustandswerte betreffend den relativen Zustand zu anderen Objekten an andere Objekte senden und von diesen anderen Objekten empfangen kann. Die Erfassungseinheit für den relativen Zustand, also der eine oder die mehreren Sensoren 116, ist mit der Datenschnittstelle 114 verbunden, um Daten auszutauschen, wie durch den Pfeil in Fig. 2 angezeigt. Über diese Verbindung werden relative Zustandswerte der Sensoren 116 über die Datenschnittstelle 114 an die Recheneinheit 122 zur Verfügung gestellt, damit die Recheneinheit 122 die relativen Zustandswerte der eigenen Plattform kennt.

Die absoluten Zustandswerte werden ermittelt mit Bezug zu einem externen Koordinatensystem und werden in diesem externen Koordinatensystem oder in ein anderes überführbares externes Koordinatensystem ausgegeben. Die erfassten relativen Zustandswerte hingegen beziehen sich auf ein anderes Verbundmitglied.

Die erste Filtereinheit 120 weist eine Recheneinheit 122 für Korrekturwertberechnungen, ein Filter 124, z.B. ein Kalman-Filter, mit einem Fehlermodell 125 der Trägheitsnavigationsanlage und eine Recheneinheit 126 zur Ableitung der relativen Zustände auf. Die erste Filtereinheit 120 erhält dabei absolute Zustandswerte, relative Zustandswerte zu anderen Objekten sowie die dazugehörigen Kovarianzen der absoluten und relativen Zustandswerte und die über die Datenverbindung von anderen Objekten empfangenen absoluten Zustandswerte inklusive der Kovarianz sowie die relativen Zustandswerte inklusive der Kovarianz. Falls die Kovarianz nicht vorhanden ist oder übertragen wird, kann diese auch durch geeignete Modelle oder Verfahren geschätzt werden.

Die zweite Filtereinheit 130 ist eine Rückfall-Option bzw. ein Ersatzsystem zu der ersten Filtereinheit 120. Die Ausgabewerte der zweiten Filtereinheit 130 werden verwendet, wenn die erste Filtereinheit 120 ausgefallen ist oder wenn die erste Filtereinheit 120 nicht alle für ihre Funktion nötigen Werte erhält (dieser Zustand kann auch als Fehlerzustand der ersten Filtereinheit 120 bezeichnet werden). Die zweite Filtereinheit 130 ist ausgestaltet, dass sie lediglich mit den Daten auskommt, die in dem Flugzeug 100 selbst ermittelt werden können. So ist für die zweite Filtereinheit nicht erforderlich, beispielsweise GNSS-Werte oder Werte, welche über die Datenschnittstelle 114 eingehen, zu erhalten, sondern es ist ausreichend, nur relative Zustandswerte, welche von Sensoren an Bord des Luftfahrzeugs 100 geliefert werden, zu erhalten.

Die zweite Filtereinheit 130 weist ein erstes Filter 132 mit einem Dynamikmodell 133 des anderen Luftfahrzeugs und ein zweites Filter 134 mit einem Bewegungsmodell 135 auf. Das erste Filter 132 und das zweite Filter 134 verwenden relative Zustandswerte und absolute Zustandswerte von einer Trägheitsnavigationsanlage, um die relativen Zustände zu den anderen Luftfahrzeugen des Verbunds autonom zu schätzen. Zur Initialisierung und im nominellen Betrieb kann die zweite Filtereinheit auch auf weitere Daten zugreifen, bspw. Daten, die über die Datenverbindung erhalten werden oder Daten der ersten Filtereinheit.

In einer alternativen Ausführungsform kann für die zweite Filtereinheit auf die absoluten Zustandswerte verzichtet werden.

Die Überwachungseinheit 140 überwacht den Zustand der Erfassungseinheit 110 und/oder der ersten Filtereinheit 120. Wenn die Komponenten der Erfassungseinheit 110 Daten erfassen oder erhalten (die absoluten Navigationsverfahren, aber mindestens die Trägheitsplattform, optional die Sensoren für die relativen Zustandswerte und die Datenschnittstelle Werte von anderen Objekten des Objektverbunds erhält) und wenn die erste Filtereinheit 120 ihre Funktionen ausführt, wird ein Zustandswert der ersten Filtereinheit für das Luftfahrzeug 100 herangezogen. Wenn jedoch keine Daten von anderen Objekten über die Datenschnittstelle 114 erhalten werden und die geschätzte relative Genauigkeit der ersten Filtereinheit die der zweiten Filtereinheit unterschreitet oder die erste Filtereinheit 120 nicht funktionsfähig ist, schaltet die Überwachungseinheit 140 für die relative Zustandswerte auf die zweite Filtereinheit 130 um und gibt ein entsprechendes Statussignal 144 aus. Für den Fall der Nichtverfügbarkeit der Datenverbindung wird jedoch weiterhin absolute Zustandswerte geliefert, die zum Zeitpunkt des Eintretens des Fehlers konsistent zu den absoluten Zustandswerten der anderen Mitglieder ist. Wobei diese Konsistenz (relative Genauigkeit zwischen den absoluten Zuständen der Mitglieder) mit fortschreitender Zeit bis zu einem gewissen Limit degradiert, falls allen Mitgliedern weiterhin mindestens ein absolutes drift-freies Navigationsverfahren zur Verfügung steht, andernfalls degradiert die Konsistenz unbeschränkt.

Die Überwachungseinheit 140 liefert einen absoluten Zustandswert 142 des eigenen Zustands, eine zugehörige absolute Zustandskovarianz, eine relative Zustandsschätzung 146, und eine zugehörige relative Zustandskovarianz sowie ein Statussignal 144.

Die erste Filtereinheit 120 liefert absolute Zustandswerte mit hoher relativer Genauigkeit sowie relative Zustandswerte, welche von den absoluten Zustandswerten abgeleitet werden. Die Recheneinheit 122 für Korrekturwertberechnungen erhält relative Zustandswerte inklusive zugehöriger Kovarianzen und absolute Zustandswerte inklusive zugehöriger Kovarianzen des eigenen Fahrzeugs sowie relative und absolute Zustandswerte inklusive zugehörigen Kovarianzen der anderen Fahrzeuge, die über die Datenverbindung übertragen werden, um Korrekturwerte für den gesamten Verbund zu berechnen. Der eigene Korrekturwert wird in der ersten Filtereinheit angewendet, so dass die absoluten Zustandswerte der Mitglieder die tatsächliche Geometrie (nicht beschränkt auf Positionszustände) des Verbunds möglichst getreu widerspiegeln und der absolute Zustandsfehler des gesamten Verbunds minimiert wird.

Das Filter 124 ist bevorzugt ein Kalman-Filter und verwendet ein Fehlermodell 125 der Trägheitsnavigationsanlage und sorgt somit für eine relativ lange Zeitstabilität der absoluten Zustandswerte und damit verbundene implizite relative Genauigkeit in Abwesenheit von absoluten oder/und relativen Messungen und/oder der Datenverbindung, sofern zuvor eine Konsistenz absolute Zustandsschätzung der Mitglieder sichergestellt wurde. Das Filter 124 führt die von der Recheneinheit 122 gelieferten Korrekturwerte, welche die absoluten und relativen Zustandswerte inklusive der jeweiligen Kovarianzen des Gesamtverbunds berücksichtigen, so dass die Ausgabewerte des Filters 124 für die verschiedenen Verbundmitglieder miteinander synchronisiert und konsistent sind, da diese Ausgabewerte auf gleichen einheitlichen Eingabewerten basieren.

Die zweite Filtereinheit 130 arbeitet im Fehlerfall autonom und unabhängig von der ersten Filtereinheit 120. Die zweite Filtereinheit 130 ist ausgestaltet, autonom zu arbeiten und verwendet im Fehlerfall Zustände, die an Bord des Luftfahrzeugs ohne externe Daten erfasst werden, so dass die zweite Filtereinheit 130 auch dann einen relativen Zustandswert ermitteln kann, wenn keine absoluten Navigationsverfahren wie beispielsweise ein GNSS-Navigationsverfahren vorhanden sind und keine Daten über die Datenschnittstelle empfangen werden. Die zweite Filtereinheit 130 arbeitet in einem Beispiel auf Daten, welche sie von dem Trägheitsnavigationssystem und den Sensoren für relative Zustandsermittlung erhält. Zur Initialisierung und im nominellen Fall (alles funktionsfähig) können auch auf externe Datenquellen wie beispielsweise GNSS und die Datenverbindung zurückgegriffen werden.

Wenn keine absoluten Navigationsverfahren oder nur noch die Trägheitsnavigationsplattform zur Verfügung stehen und/oder keine Daten über die Datenschnittstelle empfangen werden, nimmt gegebenenfalls die absolute und damit relative implizite und/oder explizite Genauigkeit des von der ersten Filtereinheit gelieferten Zustandswerts ab. In diesem Fall verwendet die Überwachungseinheit den von der zweiten Filtereinheit gelieferten relativen Zustandswert.

Die Recheneinheit 122 für die Korrekturwertberechnung arbeitet wie folgt:

Die Korrekturwerte $\delta x_i$ sollen derart berechnet werden, dass die daraus resultierenden neuen absoluten Zustände ($x_{new,i}$ = $x_{old,i} + \delta x_i$) die erfassten relativen Zustandswerte $\check{z}_{ij}$ des Objekts i bezüglich des Objekts j und damit letztendlich die relative Geometrie des Verbunds rekonstruieren:

$$\check{z}_{ij} = h\left(\left(x_{old,j} + \delta x_j\right) - \left(x_{old,i} + \delta x_i\right)\right) \tag{1}$$

Die sogenannte Messgleichung h ist dabei eine Funktion, welche aus der Differenz der absoluten Zustände i und j und ggf. anderen Variablen die zu erwartenden erfassten relativen Zustandswerte berechnet.

Gleichung (1) wird für alle im Verbund erfassten relativen Zustandswerte aufgestellt, wodurch sich ein Gleichungssystem ergibt, welches für die Korrekturwerte gelöst werden muss. Durch das Gleichungssystem sind alle Korrekturwerte miteinander gekoppelt und können nur gesamtheitlich gelöst werden, weswegen alle absolute und relative Zustandswerte und gegebenenfalls dazugehörigen Kovarianzen übertragen werden müssen, um einen gleichen einheitlichen Informationsstand für alle Mitglieder zu schaffen, bzw. der zentralen Einheit zur Verfügung zu stellen.

Das Gleichungssystem **(1)** mag zunächst nicht eindeutig lösbar sein, da sich die relative Geometrie der Verbundmitglieder und damit die relativen Zustandswerte im absoluten Zustandsraum beliebig verschieben lassen, was sich durch das Einsetzen eines beliebigen Offsets $\Delta x$ für alle Korrekturwerte zeigen lässt:

$$\check{z}_{ij} = h\left(\left(x_{old,j} + \delta x_j + \Delta x\right) - \left(x_{old,i} + \delta x_i + \Delta x\right)\right)$$

$$= h\left(\left(x_{old,j} + \delta x_j\right) \underbrace{+\Delta x - \Delta x}_{=0} - \left(x_{old,i} + \delta x_i\right)\right)$$

Da die erfassten relativen Zustandswerte keinen absoluten Bezugspunkt haben, können sie jedoch nicht den (gewichteten) Schwerpunkt des Verbunds beeinflussen - der gewichtete Schwerpunkt muss also unverändert bleiben. Diese Randbedingung wird mathematisch dadurch ausgedrückt, dass die gewichtete Summe der Korrekturwerte 0 ergibt:

$$W_Q^{-1} \sum_{i=1}^{n} Q_i^{-1} \delta x_i = 0 \tag{2}$$

wobei n die Anzahl der Verbundmitglieder repräsentiert, $W_Q$ die Normierung mit $W_Q = \sum_{i=1}^{n} Q_i^{-1}$ darstellt und als Gewichtung die Inverse der Kovarianz des Korrekturwertes $Q_i^{-1}$ gewählt wird. Die Wahl der Inversen der Kovarianz des Korrekturwertes als Gewichtung ist statistisch optimal bezüglich des gewichteten Schwerpunkts des Verbunds. Sie bewirkt, dass den Mitgliedern des Verbunds mit einem genauen absoluten Zustand (kleine Kovarianz) gegenüber den Mitgliedern des Verbunds mit einem ungenauen absoluten Zustand (große Kovarianz) ein betragsmäßiger kleinerer Korrekturwert zugeordnet wird - der genaue Zustand muss also nur kaum korrigiert werden.

Da die Randbedingung **(2)** ("gewichteter Schwerpunkt bleibt unverändert") nur bezüglich des gewichteten Schwerpunkts des Verbunds definiert ist, können die daraus resultierende relativen Zustandswerte weiterhin um den gewichteten Schwerpunkt im absoluten Zustandsraum rotiert werden. Um diesen Freiheitsgrad zu eliminieren, wird eine weitere Randbedingung dem Gleichungssystem **(1)** hinzugefügt, welche die gewichteten Abstände zwischen den alten und neuen absoluten Zuständen beschränkt - beispielsweise durch Anbringen von virtuellen Federn zwischen den alten und neuen Zuständen mit einer gewissen Neutralposition, um eine gewisse Beweglichkeit einzugestehen, und einer gewissen Federhärte, um die Gewichtung zu reflektieren.

Die in der Randbedingung **(2)** eingeführte Kovarianz des Korrekturwerts $Q_i$ ist zunächst unbekannt und muss wiederum über ein Gleichungssystem gelöst werden, das sich aus der linearisierten Form der Gleichung (1) ergibt:

$$H_{ij} \underbrace{Var\big(\delta x_j - \delta x_i\big)}_{Q_i + Q_j - 2Cov(Q_i, Q_j)} H_{ij}{}^T = Var\left(\check{z}_{ij} - h\big(x_{old,j} - x_{old,i}\big)\right) \qquad\qquad \textbf{(3)}$$

$$H_{ij} = \left.\frac{\partial h(x)}{\partial x}\right|_{x = x_j - x_i}$$

wobei     .

Auch das Gleichungssystem **(3)** mag zunächst nicht eindeutig lösbar sein, daher wird eine analoge Randbedingung gemäß der Randbedingung (2) eingeführt. Diese Randbedingung bedeutet, dass die Summe der gewichteten Kovarianzen der Korrekturwerte eine sphärische Fehlerellipse darstellt, welche die Optimalität der Lösung widerspiegelt:

$$Var\left(W_Q^{-1} \sum_{i=1}^{n} Q_i^{-1} \delta x_i\right) = W_Q^{-1} \sum_{i=1}^{n} Q_i^{-1} \underbrace{Var(\delta x_i)}_{Q_i} Q_i^{-T} = \boldsymbol{I}$$

Da $Q_i$ nicht bekannt ist, kann $Q_i$ mit der Kovarianz des alten Zustandes approximiert werden oder alternativ kann das Gleichungssystem durch iterative Verfahren gelöst werden.

Allgemein ausgedrückt wird in der Recheneinheit 122 der Korrekturwert berechnet und an das Filter 124 übergeben. In dem Filter 124 wird der eigene korrigierte absolute Zustand ermittelt. Die Recheneinheit 126 ermittelt unter Verwendung des eigenen absoluten Zustands und der absoluten Zustände der anderen Mitglieder eines Verbunds den relativen Zustand des eigenen Objekts zu den anderen Mitgliedern.

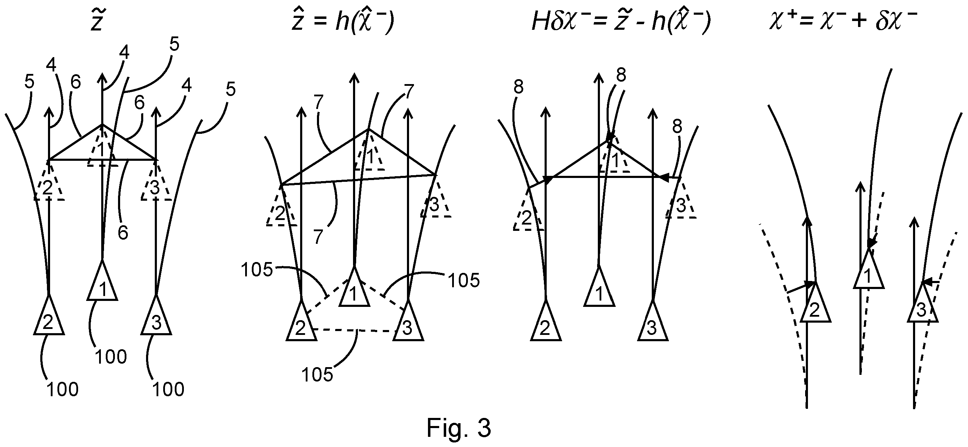

Fig. 3 veranschaulicht die Arbeitsweise der Recheneinheit 122 für die Korrekturwertberechnung aus Fig. 2.

In Fig. 3 sind drei Luftfahrzeuge 100 gezeigt, nummeriert mit den Ziffern 1, 2, 3. Diese Luftfahrzeuge bewegen sich jeweils entlang einer tatsächlichen Trajektorie 4.

Die Darstellung ganz links zeigt einen Bewegungsverlauf der Luftfahrzeuge 1, 2, 3 entlang der Trajektorie 4. Der erfasste absolute Zustand 5 basiert auf einer Trägheitsnavigationsanlage. Es ist zu erkennen, dass dieser absolute Zustand 5 zu einem späteren Zeitpunkt (gestrichelt gezeichnete Luftfahrzeuge) von der tatsächlichen Trajektorie immer weiter abweicht (der sog. Drift). Der Drift der einzelnen Luftfahrzeuge kann unterschiedlich sein. Beispielsweise driftet der absolute Zustand des Luftfahrzeugs 2 nach links und der absolute Zustand der Luftfahrzeuge 1 und 3 nach rechts, wobei der absolute Zustand des Luftfahrzeugs 3 stärker nach rechts driftet als diejenige des Luftfahrzeugs 1. Weiterhin werden die erfassten relativen Zustände zwischen den Luftfahrzeugen 1, 2, 3 durch die Linien 6 angezeigt. Die erfassten relativen Zustände inklusive der zugehörigen Kovarianz sowie die erfassten absoluten Zustandswerte inklusive der zugehörigen Kovarianz werden zwischen den Luftfahrzeugen über eine Datenverbindung 105 ausgetauscht.

Die zweite Darstellung von links zeigt, dass die erwarteten relativen Zustandswerte 7 anhand der erfassten absoluten Zustandswerte 5 ermittelt werden. Die Korrekturwerte 8 werden von allen Mitgliedern für alle Mitglieder des Verbunds berechnet, wie in der dritten Darstellung von links gezeigt. Die Mitglieder wenden den eigenen Korrekturwert an, so dass die ermittelten absoluten Zustandswerte die erfassten relativen Zustände widerspiegeln und so dass zugleich der absolute Fehler des Verbunds minimiert wird. Somit wird die tatsächliche relative Konstellation der Mitglieder bezüglich der absoluten Zustandswerte wiederhergestellt. Alternativ berechnet eine zentrale Einheit die Korrekturwerte aller Mitglieder und überträgt die Korrekturwerte an die entsprechenden Mitglieder, welche den Korrekturwert auf den eigenen absoluten Zustand anwenden.

In der Darstellung rechts wird gezeigt, dass der berechnete Korrekturwert in dem Filter 124 verwendet wird, um den Zustandswert zu korrigieren. Alternativ kann ein Prädiktor-Korrektur-Funktionsprinzip verwendet werden, d.h. der Korrekturwert wird direkt angewendet. Von den vormaligen absoluten Zustandswerten, die mit gestrichelten Linien gezeigt sind, ergeben sich neue absolute Zustandswerte für jedes der Luftfahrzeuge 1, 2, 3.

Um die Korrekturwerte berechnen zu können, werden die erfassten relativen Zustandswerte mit den erwarteten relativen Zuständen gemäß den absoluten Zustandswerten der Filter abgeglichen. Die Korrekturwerte entsprechen der Differenz zwischen einem erfassten und einem erwarteten relativen Zustandswert. welche anhand der Beobachtungsmatrix H vom absoluten Zustandsraum in den Messraum der relativen Zustände transformiert werden, ausgedrückt durch die Formel $H\delta x^- = \tilde{z} - h(\hat{x}^-)$. Die eigenen absoluten Zustandswerte sind nicht ausreichend, um die erwartenden relativen Zustandswerte mit Bezug zu bewegten Objekten zu ermitteln. Der Begriff "bewegte Objekte" definiert sich, dass sich ihr Zustand über die Zeit verändert, bzw. nicht deterministisch ändert - ein Beispiel für eine deterministische Änderung wäre die Erdrotation, die auf Grund der Deterministik vom Objekt selbst kompensiert werden kann.

Die Zustandswerte der bewegten Objekte sind nötig, um mit dem Umstand umgehen zu können, dass die absoluten Zustände und die relativen Zustände in fundamental unterschiedlichen Koordinatensystemen definiert sind (die absoluten Zustandswerte sind bezüglich eines absoluten Koordinatensystems definiert, während die relativen Zustände auf ein sich bewegendes Objekt beziehen). Indem die absoluten Zustandswerte zwischen Verbundmitgliedern ausgetauscht werden, können die erwartenden relativen Zustände anhand der Differenz der absoluten Zustandswerte berechnet werden.

Nun kann basierend auf dem Vergleich zwischen erfassten relativen Zustandswerten und den erwarteten relativen Zustandswerten, welche anhand der Differenz der absoluten Zustandswerte bestimmt werden, ein Korrekturwert theoretisch bestimmt werden. Allerdings können diese theoretischen resultierenden Korrekturwerte noch nicht eindeutig an die Verbundmitglieder zugewiesen werden, weil die Überlagerung mehrerer Korrekturwerte auf verschiedene Weisen erfolgen kann. Diese Uneindeutigkeit kann aufgelöst werden, indem die Randbedingung eingeführt wird wie oben dargelegt, dass die gewichteten Summen aller Korrekturwerte 0 ist. Die Gewichtung erfolgt gemäß der Inversen der Kovarianz der Korrekturwerte, wie oben beschrieben.

Die Recheneinheit 122 für die Korrekturwertberechnung arbeitet so, dass die nach Anwendung der Korrekturwerte resultierenden absoluten Zustände der Verbundmitglieder konsistent ermittelt werden, d.h. dass die relative Geometrie des Verbunds bezüglich der absoluten Zustandswerte korrekt rekonstruiert wird. Wenn keine absoluten drift-freie Navigationsverfahren in dem gesamten Verbund verfügbar sind, driften die ermittelten absoluten Zustandswerte des Verbunds gesamtheitlich, weil die individuellen Lösungen der ersten Filtereinheit der Verbundmitglieder auf Grund der Korrekturwertberechnung, die auf den gleichen einheitlichen Informationsstand für alle Mitglieder erfolgt, synchronisiert werden - der Drift ist den Trägheitsnavigationsanlagen geschuldet. Statistisch ist die Genauigkeit der absoluten Zustandswerte des gesamten Verbunds oder anders gesehen die Genauigkeit des gewichteten Schwerpunkts des Verbunds bezüglich der absoluten Zustandswerte geringer als die Genauigkeit der absoluten Zustandswerte eines individuellen, beliebigen Objekts des Verbunds. Alsbald ein einzelnes Luftfahrzeug des Verbunds ein absolutes driftfreies Navigationsverfahren zur Verfügung hat, sind die ermittelten absoluten Zustandswerte aller Mitglieder langzeitstabil aufgrund der Synchronisation mittels der Korrekturwerte. Verbundmitglieder mit Sensorausfällen werden von anderen Verbundmitgliedern mit Zustandswerte versorgt, nämlich über die Datenverbindung zwischen den Verbundmitgliedern.

Folgende Zusammenfassung gibt einen Überblick über das Zusammenwirken der Objekte im Verbund und die Funktionen eines einzelnen Verbundmitglieds:
Ein Verbundmitglied übermittelt die ermittelten absolute Zustandswerte und die zugehörige Kovarianz sowie erfassten relative Zustandswerte und die zugehörige Kovarianz an andere Verbundmitglieder.

Die Recheneinheit 122 der Verbundmitglieder ermittelt die Beobachtungsmatrix H der erfassten relativen Zustandswerte des gesamten Verbunds ( $H_{ij} = \dfrac{\partial h(x)}{\partial x}$ ), ermittelt die Kovarianz der Korrekturwerte in dem Zustandsraum des gesamten Verbunds (Q), ermittelt das Messresiduum im Messraum zwischen erfassten relativen Zustand und erwarteten relativen Zustand bezüglich der absoluten Zustandswerte des gesamten Verbunds ($\delta z^- = \tilde{z} - h(\hat{x}^-)$), ermittelt die Korrekturwerte im Zustandsraum des gesamten Verbunds ($H\delta x^- = \delta z^-$) unter Verwendung der Randbedingung des gewichteten Schwerpunkts des Verbunds ( $W_Q^{-1} \sum_{i=1}^{n} Q_i^{-1} \delta x_i = 0$ ) und ermittelt die Korrekturwerte im Zustandsraum des gesamten Verbunds unter zusätzlicher Berücksichtigung der zweiten Randbedingung der Federn.

Das Filter 124 verwendet den Teil der Korrekturwerte und der Korrekturwert-Kovarianz, der dem eigenen Verbundmitglied entspricht, für die Korrektur der eigenen (geschätzten) Zustandswerte.

Im Nachfolgenden wird die relative explizite und relative implizite Zustandsermittlung basierend auf den absoluten Zustandswerten sowie deren Implikation auf ein Regelungs- oder Steuerungssystem beschrieben. Bei der expliziten relativen Zustandsermittlung wird der relative Zustand tatsächlich anhand der Differenz der absoluten Zustandswerte berechnet, während für die implizite relative Zustandsermittlung der relative Zustand nicht tatsächlich berechnet wird. Entsprechend regelt/steuert ein Regelungs- oder Steuerungssystem basierend auf den relativen Zustandswerten im Fall der expliziten relativen Zustandsermittlung und im Fall der impliziten relativen Zustandsermittlung wird die absolute Zustandsermittlung herangezogen.

Die eigene absolute Zustandsermittlung mit dem gleichen Gültigkeitsdatum wie die Zustandsermittlung der anderen Verbundmitglieder wird explizit von den absoluten Zustandsermittlung der anderen Verbundmitglieder subtrahiert, um eine relative Zustandsermittlung zu erhalten. Allerdings sind die vorliegenden absoluten Zustandsermittlung der anderen Verbundmitglieder und damit diese expliziten relativen Zustandsermittlung älter als die eigene aktuellste absolute Zustandsermittlung, auf Grund der Latenz der Verarbeitungskomponenten (insbesondere der Datenverbindung), welche genutzt werden, um die absolute Zustandsermittlung von den anderen Verbundmitgliedern zu erhalten. Alternativ können die empfangenen Daten propagiert werden, um das gleiche Gültigkeitsdatum zu erhalten wie für die eigene absolute Zustandsermittlung, was jedoch in einer Fehlerfortpflanzung durch die Propagation einhergeht.

Die zweite Möglichkeit sieht vor, dass die relativen Zustandsermittlungen durch die Verbundmitglieder nicht explizit ermittelt werden. Die daher implizite relative Zustandsgenauigkeit kann einzig in einer Nachverarbeitung oder in einer Simulation ermittelt werden. So lange jedes Verbundmitglied nicht seinen Flugkorridor verlässt (unter Berücksichtigung der Unsicherheit der Zustandsermittlung), müssen die Verbundmitglieder den relativen Zustand zueinander nicht explizit kennen, weshalb für diesen Fall keine Flugsteuergesetze basierend auf relativen Zustandsermittlungen nötig sind. Allerdings wird hierbei vorausgesetzt, dass die absolute Zustandsermittlung der Verbundmitglieder konsistent ist, was durch die erste Filtereinheit 120 sichergestellt wird.

Bezugszeichenliste

| | |
|---|---|
| 1 | Fahrzeug |
| 2 | Fahrzeug |
| 3 | Fahrzeug |
| 4 | tatsächliche Trajektorie |
| 5 | erfasster absoluter Zustand |
| 6 | erfasster relativer Zustand |
| 7 | erwarteter relativer Zustand |
| 8 | Korrekturwert |
| 10 | Verfahren |
| 11-16 | Verfahrensschritte |
| 100 | Fahrzeug |
| 105 | Datenverbindung |
| 110 | Erfassungseinheit |
| 112 | Einheit für absolute Navigationsverfahren |
| 114 | Datenschnittstelle |
| 116 | Sensor (relative Zustandsermittlung, optische Sensoren, Kamera, Lidar) |
| 120 | erste Filtereinheit |
| 122 | Recheneinheit für Korrekturwertberechnung |
| 124 | Filter |
| 125 | Fehlermodell für Sensoren |
| 126 | Recheneinheit zum Bestimmen eines relativen Zustandswerts |
| 130 | zweite Filtereinheit |
| 132 | Filter |
| 133 | Dynamikmodell der anderen Fahrzeuge |
| 134 | Filter |
| 135 | Bewegungsmodell |
| 140 | Überwachungseinheit |
| 142 | eigene absolute Zustandsermittlung |
| 144 | Statusausgabe |
| 146 | relative Zustandsermittlung |

**Patentansprüche**

1. Verfahren zum Ermitteln eines Korrekturwertes eines Zustands eines Objekts in einem Verbund bestehend aus mehreren Objekten, wobei das Verfahren die folgenden Schritte aufweist:

Erfassen (11), durch jedes Objekt des Verbunds, eines absoluten eigenen Zustands in einem bestehenden Koordinatensystem;
Erfassen (12), durch ein erstes Objekt des Verbunds, eines relativen Zustands des ersten Objekts zu einem oder mehreren anderen Objekten des Verbunds;
Übermitteln (13), durch das erste Objekt, des erfassten relativen Zustands und des erfassten absoluten eigenen Zustands über eine Datenverbindung an eines oder mehrere der anderen Objekte des Verbunds;

Austauschen (14) von erfassten relativen Zuständen und erfassten absoluten Zuständen in dem Verbund von Objekten, so dass alle Objekte einen gleichen einheitlichen Informationsstand haben;
Berechnen (15) eines Korrekturwertes durch jedes Objekt für alle Objekte des Verbunds basierend auf dem einheitlichen Informationsstand;
Anwenden (16), durch ein Objekt, des eigenen Korrekturwertes auf den eigenen erfassten absoluten Zustand;
**dadurch gekennzeichnet, dass**
der Korrekturwert $\delta x_i$ derart berechnet wird, dass daraus resultierende neue absolute Zustandswerte $x_{new,i}$, die sich gemäß $x_{new,i} = x_{old,i} + \delta x_i$ aus einem alten Zustandswert $x_{old,i}$ und einem Korrekturwert $\delta x_i$ ergeben, relative Zustandswerte $\check{z}_{ij}$ eines ersten Objektes i zu einem zweiten Objekt j und damit eine relative Konstellation der Objekte des Verbunds bezüglich der absoluten Zustandswerte durch Anwendung der folgenden Gleichung rekonstruieren:

$$\check{z}_{ij} = h\left(\left(x_{old,j} + \delta x_j\right) - \left(x_{old,i} + \delta x_i\right)\right) \text{ (Gl. 1)}$$

wobei h eine Funktion ist, welche aus einer Differenz der absoluten Zustände der Objekte i und j die relativen Zustandswerte $\check{z}_{ij}$ berechnet;
wobei Gl. 1 für alle im Verbund erfassten relativen Zustandswerte aufgestellt wird, wodurch sich ein Gleichungssystem ergibt, welches zum Ermitteln der Korrekturwerte $\delta x_i$ gelöst wird und durch das Gleichungssystem alle Korrekturwerte $\delta x_i$ miteinander gekoppelt sind und nur gesamtheitlich gelöst werden können, wobei alle absoluten und relative Zustandswerte und gegebenenfalls dazugehörigen Kovarianzen übertragen werden müssen, um einen gleichen einheitlichen Informationsstand für alle Objekte des Verbunds zu schaffen;
wobei als erste Randbedingung gilt, dass eine gewichtete Summe der Korrekturwerte Null ergibt, gemäß

$$W_Q^{-1} \sum_{i=1}^n Q_i^{-1} \delta x_i = 0 \text{ (Gl. 2)};$$

wobei n die Anzahl der Objekte im Verbund repräsentiert, $W_Q$ die Normierung mit $W_Q = \sum_{i=1}^n Q_i^{-1}$ darstellt und als Gewichtung die Inverse der Kovarianz des Korrekturwertes $Q_i^{-1}$ gewählt wird;
wobei der Gl. 1 eine zweite Randbedingung hinzugefügt wird, welche die gewichteten Abstände zwischen den alten und neuen absoluten Zuständen beschränkt;
wobei die in der ersten Randbedingung herangezogene Kovarianz des Korrekturwertes $Q_i$ über Gl. 3 gelöst wird, die sich aus einer linearisierten Form der Gl. 1 ergibt:

$$H_{ij} \underbrace{Var\left(\delta x_j - \delta x_i\right)}_{Q_i + Q_j - 2Cov(Q_i, Q_j)} H_{ij}^T = Var\left(\check{z}_{ij} - h(x_{old,j} - x_{old,i})\right) \text{ (Gl. 3)},$$

wobei $H_{ij} = \left.\frac{\partial h(x)}{\partial x}\right|_{x = x_j - x_i}$ ;

wobei eine dritte Randbedingung eingeführt wird, wonach die Summe der gewichteten Kovarianzen der Korrekturwerte eine sphärische Ellipse darstellt, welche die Optimalität der Lösung gemäß

$$Var\left(W_Q^{-1} \sum_{i=1}^n Q_i^{-1} \delta x_i\right) = W_Q^{-1} \sum_{i=1}^n Q_i^{-1} \underbrace{Var(\delta x_i)}_{Q_i} Q_i^{-T} = I$$

widerspiegelt,
wobei $Q_i$ mit der Kovarianz des alten Zustandes approximiert wird oder das Gleichungssystem durch iterative Verfahren gelöst wird.

2. Verfahren nach Anspruch 1,
wobei neben den erfassten relativen Zuständen und den erfassten absoluten Zuständen auch eine zu jedem Zustandswert gehörige Kovarianz ausgetauscht wird.

3. Verfahren nach Anspruch 1 oder 2,
wobei zum Berechnen des Korrekturwertes ein absoluter Fehlerwert des Verbunds von Objekten minimiert wird.

4. Verfahren nach einem der voranstehenden Ansprüche,
wobei der Korrekturwert in einem Filter mindestens eines Objekts verwendet wird, um einen Zustandswert dieses Objekts zu korrigieren.

5. Verfahren nach einem der voranstehenden Ansprüche,
wobei ein Zustandswert des absoluten Zustands und/oder des relativen Zustands Informationen zu einem oder mehreren der folgenden Parameter eines Objekts enthält: Position, Geschwindigkeit, Lage, Beschleunigung, Drehrate, relative Position zu einem oder mehreren anderen Objekten, relativer Abstand zu einem oder mehreren anderen Objekten, relative Geschwindigkeit zu einem oder mehreren anderen Objekten, relative Lage zu einem oder mehreren anderen Objekten.

6. Verfahren zum Ermitteln eines Korrekturwertes eines Zustands eines Objekts in einem Verbund bestehend aus mehreren Objekten, wobei das Verfahren die folgenden Schritte aufweist:

Erfassen (11), durch jedes Objekt des Verbunds, eines absoluten eigenen Zustands in einem bestehenden Koordinatensystem;
Erfassen (12), durch ein erstes Objekt des Verbunds, eines relativen Zustands des ersten Objekts zu einem oder mehreren anderen Objekten des Verbunds;
Übermitteln (13), durch das erste Objekt, des erfassten relativen Zustands und des erfassten absoluten eigenen Zustands über eine Datenverbindung an eine zentrale Einheit, so dass die zentrale Einheit sämtliche erfassten absoluten und relativen Zustände der Objekte des Verbunds erhält;
Berechnen (15) eines Korrekturwertes für jedes Objekts des Verbunds durch die zentrale Einheit basierend auf den absoluten und relativen Zuständen aller Objekte des Verbunds;
Übermitteln der Korrekturwerte an das jeweilige Objekt des Verbunds;
Anwenden (16), durch jedes Objekt des Verbunds, des eigenen Korrekturwertes auf den eigenen erfassten absoluten Zustand;
**dadurch gekennzeichnet, dass**
der Korrekturwert $\delta x_i$ derart berechnet wird, dass daraus resultierende neue absolute Zustandswerte $x_{new,i}$, die sich gemäß $x_{new,i} = x_{old,i} + \delta x_i$ aus einem alten Zustandswert $x_{old,i}$ und einem Korrekturwert $\delta x_i$ ergeben, relative Zustandswerte $\check{z}_{ij}$ eines ersten Objektes i zu einem zweiten Objekt j und damit eine relative Konstellation der Objekte des Verbunds bezüglich der absoluten Zustandswerte durch Anwendung der folgenden Gleichung rekonstruieren:

$$\check{z}_{ij} = h\left(\left(x_{old,j} + \delta x_j\right) - \left(x_{old,i} + \delta x_i\right)\right) \text{ (Gl. 1)}$$

wobei h eine Funktion ist, welche aus einer Differenz der absoluten Zustände der Objekte i und j die relativen Zustandswerte $\check{z}_{ij}$ berechnet;
wobei Gl. 1 für alle im Verbund erfassten relativen Zustandswerte aufgestellt wird, wodurch sich ein Gleichungssystem ergibt, welches zum Ermitteln der Korrekturwerte $\delta x_i$ gelöst wird und durch das Gleichungssystem alle Korrekturwerte $\delta x_i$ miteinander gekoppelt sind und nur gesamtheitlich gelöst werden können, wobei alle absoluten und relative Zustandswerte und gegebenenfalls dazugehörigen Kovarianzen übertragen werden müssen, um der zentralen Einheit einen gleichen einheitlichen Informationsstand zur Verfügung zu stellen;
wobei als erste Randbedingung gilt, dass eine gewichtete Summe der Korrekturwerte Null ergibt, gemäß

$$W_Q^{-1} \sum_{i=1}^{n} Q_i^{-1} \delta x_i = 0 \text{ (Gl. 2)};$$

wobei n die Anzahl der Objekte im Verbund repräsentiert, $W_Q$ die Normierung mit $W_Q = \sum_{i=1}^{n} Q_i^{-1}$ darstellt und als Gewichtung die Inverse der Kovarianz des Korrekturwertes $Q_i^{-1}$ gewählt wird;
wobei der Gl. 1 eine zweite Randbedingung hinzugefügt wird, welche die gewichteten Abstände zwischen den alten und neuen absoluten Zuständen beschränkt;

wobei die in der ersten Randbedingung herangezogene Kovarianz des Korrekturwertes $Q_i$ über Gl. 3 gelöst wird, die sich aus einer linearisierten Form der Gl. 1 ergibt:

$$H_{ij} \underbrace{Var\left(\delta x_j - \delta x_i\right)}_{Q_i + Q_j - 2Cov(Q_i, Q_j)} H_{ij}{}^{T} = Var\left(\check{z}_{ij} - h\left(x_{old,j} - x_{old,i}\right)\right) \text{ (Gl. 3)},$$

wobei $H_{ij} = \dfrac{\partial h(x)}{\partial x}\bigg|_{x = x_j - x_i}$ ;

wobei eine dritte Randbedingung eingeführt wird, wonach die Summe der gewichteten Kovarianzen der Korrekturwerte eine sphärische Ellipse darstellt, welche die Optimalität der Lösung gemäß

$$Var\left(W_Q^{-1} \sum_{i=1}^n Q_i^{-1} \delta x_i\right) = W_Q^{-1} \sum_{i=1}^n Q_i^{-1} \underbrace{Var(\delta x_i)}_{Q_i} Q_i^{-T} = I$$

widerspiegelt,

wobei $Q_i$ mit der Kovarianz des alten Zustandes approximiert wird oder das Gleichungssystem durch iterative Verfahren gelöst wird.

7. Fahrzeug (100), insbesondere ein Luftfahrzeug, aufweisend:

eine Erfassungseinheit (110), welche ausgestaltet ist, absolute und relative Zustandswerte des Fahrzeugs zu erfassen, wobei die Erfassungseinheit (110) einen oder mehrere Sensoren (112, 116) zum Bestimmen eines absoluten und eines relativen Zustands aufweist, und wobei die Erfassungseinheit eine Datenschnittstelle (114) aufweist, welche ausgestaltet ist, eigene relative und absolute Zustandswerte zu übermitteln und relative und absolute Zustandswerte von Objekten eines Verbunds zu erhalten;

eine erste Filtereinheit (120), welche ausgestaltet ist, die von der Erfassungseinheit erfassten absoluten und relativen Zustandswerte zu verarbeiten, um einen korrigierten absoluten Zustandswert und einen korrigierten relativen Zustandswert des Fahrzeugs bezüglich anderer Objekte in dem Verbund mit dem Verfahren nach einem der Ansprüche 1 bis 5 zu ermitteln;

eine zweite Filtereinheit (130), welche ausgestaltet ist, die von der Erfassungseinheit erfassten absoluten und relativen Zustandswerte zu verarbeiten, um einen relativen Zustandswert zu anderen Fahrzeugen als Ausgabewert zu ermitteln;

eine Überwachungseinheit (140), welche ausgestaltet ist, einen Status der ersten Filtereinheit (120) und der zweiten Filtereinheit (130) zu überwachen;

wobei die Überwachungseinheit ausgestaltet ist, den korrigierten absoluten Zustandswert und den korrigierten relativen Zustandswert von der ersten Filtereinheit weiterzuleiten, wenn für die erste Filtereinheit (120) ein normaler Betriebszustand festgestellt wurde, andernfalls den relativen Zustandswert von der zweiten Filtereinheit weiterzuleiten, wenn für die erste Filtereinheit (120) ein fehlerhafter Betriebszustand festgestellt wurde oder wenn eine geschätzte relative Genauigkeit der zweiten Filtereinheit besser ist als eine geschätzte relative Genauigkeit der ersten Filtereinheit.

8. Fahrzeug (100) nach Anspruch 7,

wobei die Überwachungseinheit (140) ausgestaltet ist, den Status der ersten Filtereinheit als fehlerhaften Betriebszustand einzuordnen, wenn über die Datenschnittstelle (114) der Erfassungseinheit (110) keine Datenverbindung aufgebaut ist.

## Claims

1. Method for determining a correction value of a state of an object in an association consisting of a plurality of objects, wherein the method comprises the following steps:

each object in the association recording (11) its own absolute state in an existing coordinate system;

a first object in the association recording (12) a relative state of the first object in relation to one or more other objects in the association;

the first object transmitting (13) the recorded relative state and its own recorded absolute state via a data connection to one or more of the other objects in the association;

exchanging (14) recorded relative states and recorded absolute states in the association of objects so that all objects have the same uniform information status;

each object calculating (15) a correction value for all objects in the association based on the uniform information status;

an object applying (16) its own correction value to its own recorded absolute state;

**characterized in that** the correction value $\delta x_i$ is calculated in such a way that new absolute state values $x_{new,i}$ resulting therefrom, which are obtained from an old state value $x_{old,i}$ and a correction value $\delta x_i$ according to $X_{new,i} = X_{old,i} + \delta x_i$, reconstruct relative state values $\check{Z}_{ij}$ of a first object i in relation to a second object j and therefore a relative configuration of the objects in the association in relation to the absolute state values by applying the following equation:

$$\check{z}_{ij} = h\left(\left(x_{old,j} + \delta x_j\right) - \left(x_{old,i} + \delta x_i\right)\right) \quad \text{(Eq. 1)},$$

where h is a function which calculates the relative state values $\check{Z}_{ij}$ from a difference between the absolute states of objects i and j;

wherein Eq. 1 is established for all the relative state values recorded in the association, thus resulting in an equation system which is solved in order to determine the correction values $\delta x_i$, and all correction values $\delta x_i$ are coupled to one another by the equation system and can only be solved as a whole, wherein all absolute and relative state values and, where applicable, associated covariances must be transferred in order to create an identical uniform information status for all objects in the association;

wherein the first boundary condition is that a weighted sum of the correction values is zero according to

$$W_Q^{-1} \sum_{i=1}^{n} Q_i^{-1} \delta x_i = 0 \quad \text{(Eq. 2)};$$

where n represents the number of objects in the association, $W_Q$ represents the normalization with $W_Q = \sum_{i=1}^{n} Q_i^{-1}$ and the inverse of the covariance of the correction value $Q_i^{-1}$ is chosen as the weighting;

wherein a second boundary condition is added to Eq. 1 and limits the weighted distances between the old and new absolute states;

wherein the covariance of the correction value $Q_i$ that is used in the first boundary condition is solved using Eq.3 which is obtained from a linearized form of Eq. 1:

$$H_{ij} \underbrace{Var\left(\delta x_j - \delta x_i\right)}_{Q_i + Q_j - 2Cov(Q_i, Q_j)} H_{ij}{}^T = Var\left(\check{z}_{ij} - h\left(x_{old,j} - x_{old,i}\right)\right) \quad \text{(Eq. 3)},$$

where $H_{ij} = \left.\dfrac{\partial h(x)}{\partial x}\right|_{x = x_j - x_i}$;

wherein a third boundary condition is introduced, according to which the sum of the weighted covariances of the correction values represents a spherical ellipse which reflects the optimality of the solution according to

$$Var\left(W_Q^{-1} \sum_{i=1}^{n} Q_i^{-1} \delta x_i\right) = W_Q^{-1} \sum_{i=1}^{n} Q_i^{-1} \underbrace{Var(\delta x_i)}_{Q_i} Q_i^{-T} = I \quad ;$$

where $Q_i$ is approximated with the covariance of the old state or the equation system is solved by iterative methods.

2. Method according to Claim 1,
wherein a covariance associated with each state value is also exchanged along with the recorded relative states and the recorded absolute states.

3. Method according to Claim 1 or 2,

wherein an absolute error value of the association of objects is minimized for calculating the correction value.

4. Method according to one of the preceding claims,
wherein the correction value is used in a filter of at least one object in order to correct a state value of this object.

5. Method according to one of the preceding claims,
wherein a state value of the absolute state and/or the relative state contains information relating to one or more of the following parameters of an object: position, speed, bearing, acceleration, rotational speed, relative position in relation to one or more other objects, relative distance in relation to one or more other objects, relative speed in relation to one or more other objects, relative bearing in relation to one or more other objects.

6. Method for determining a correction value of a state of an object in an association consisting of a plurality of objects, wherein the method comprises the following steps:

each object in the association recording (11) its own absolute state in an existing coordinate system;
a first object in the association recording (12) a relative state of the first object in relation to one or more other objects in the association;
the first object transmitting (13) the recorded relative state and its own recorded absolute state via a data connection to a central unit so that the central unit receives all recorded absolute and relative states of the objects in the association;
the central unit calculating (15) a correction value for each object in the association based on the absolute and relative states of all objects in the association;
transmitting the correction values to the respective object in the association;
each object in the association applying (16) its own correction value to its own recorded absolute state;
**characterized in that** the correction value $\delta x_i$ is calculated in such a way that new absolute state values $x_{new,i}$ resulting therefrom, which are obtained from an old state value $x_{old,i}$ and a correction value $\delta x_i$ according to $x_{new,i} = X_{old,i} + \delta x_i$, reconstruct relative state values $\check{Z}_{ij}$ of a first object i in relation to a second object j and therefore a relative configuration of the objects in the association in relation to the absolute state values by applying the following equation:

$$\check{z}_{ij} = h\left(\left(x_{old,j} + \delta x_j\right) - \left(x_{old,i} + \delta x_i\right)\right) \quad \text{(Eq. 1)},$$

where h is a function which calculates the relative state values $\check{Z}_{ij}$ from a difference between the absolute states of objects i and j;
wherein Eq. 1 is established for all the relative state values recorded in the association, thus resulting in an equation system which is solved in order to determine the correction values $\delta x_i$, and all correction values $\delta x_i$ are coupled to one another by the equation system and can only be solved as a whole, wherein all absolute and relative state values and, where applicable, associated covariances must be transferred in order to provide the central unit with an identical uniform information status;
wherein the first boundary condition is that a weighted sum of the correction values is zero according to

$$W_Q^{-1} \sum_{i=1}^n Q_i^{-1} \delta x_i = 0 \quad \text{(Eq. 2)};$$

where n represents the number of objects in the association, $W_Q$ represents the normalization with $W_Q = \sum_{i=1}^n Q_i^{-1}$ and the inverse of the covariance of the correction value $Q_i^{-1}$ is chosen as the weighting;
wherein a second boundary condition is added to Eq. 1 and limits the weighted distances between the old and new absolute states;
wherein the covariance of the correction value $Q_i$ that is used in the first boundary condition is solved using Eq.3 which is obtained from a linearized form of Eq. 1:

$$H_{ij} \underbrace{Var(\delta x_j - \delta x_i)}_{Q_i + Q_j - 2Cov(Q_i, Q_j)} H_{ij}{}^T = Var\left(\v{z}_{ij} - h(x_{old,j} - x_{old,i})\right)$$

$$(Eq. \ 3),$$

$$H_{ij} = \left.\frac{\partial h(x)}{\partial x}\right|_{x = x_j - x_i}$$

where ;

wherein a third boundary condition is introduced, according to which the sum of the weighted covariances of the correction values represents a spherical ellipse which reflects the optimality of the solution according to

$$Var\left(W_Q^{-1} \sum_{i=1}^{n} Q_i^{-1} \delta x_i\right) = W_Q^{-1} \sum_{i=1}^{n} Q_i^{-1} \underbrace{Var(\delta x_i)}_{Q_i} Q_i^{-T} = I$$

;

where $Q_i$ is approximated with the covariance of the old state or the equation system is solved by iterative methods.

7. Vehicle (100), in particular an aircraft, having:

a recording unit (110) which is designed to record absolute and relative state values of the vehicle, wherein the recording unit (110) has one or more sensors (112, 116) for determining an absolute and a relative state, and wherein the recording unit has a data interface (114) which is designed to transmit its own relative and absolute state values and to receive relative and absolute state values from objects in an association;
a first filter unit (120) which is designed to process the absolute and relative state values recorded by the recording unit in order to determine a corrected absolute state value and a corrected relative state value of the vehicle in relation to other objects in the association using the method according to one of Claims 1 to 5;
a second filter unit (130) which is designed to process the absolute and relative state values recorded by the recording unit in order to determine a relative state value in relation to other vehicles as an output value;
a monitoring unit (140) which is designed to monitor a status of the first filter unit (120) and the second filter unit (130);
wherein the monitoring unit is designed to forward the corrected absolute state value and the corrected relative state value from the first filter unit if a normal operational state has been identified for the first filter unit (120), or otherwise to forward the relative state value from the second filter unit if an incorrect operational state has been established for the first filter unit (120) or if an estimated relative precision of the second filter unit is better than an estimated relative precision of the first filter unit.

8. Vehicle (100) according to Claim 7,
wherein the monitoring unit (140) is designed to categorize the status of the first filter unit as an incorrect operational state if no data connection is set up via the data interface (114) of the recording unit (110) .

**Revendications**

1. Procédé pour déterminer une valeur de correction d'un état d'un objet dans un groupement constitué de plusieurs objets, le procédé comprenant les étapes suivantes :

détection (11), par chaque objet du groupement, d'un état propre absolu dans un système de coordonnées existant ;
détection (12), par un premier objet du groupement, d'un état relatif du premier objet par rapport à un ou plusieurs autres objets du groupement ;
transmission (13), par le premier objet, de l'état relatif détecté et l'état propre absolu détecté à un ou plusieurs des autres objets du groupement par le biais d'une liaison de données ;
échange (14) d'états relatifs détectés et d'états absolus détectés dans le groupement d'objets, de sorte que tous les objets ont un même niveau d'information uniforme ;
calcul (15) d'une valeur de correction par chaque objet pour tous les objets du groupement sur la base du niveau d'information uniforme ;
application (16), par un objet, de la valeur de correction propre à l'état propre absolu détecté ;
**caractérisé en ce que** la valeur de correction $\delta x_i$ est calculée de telle sorte que les nouvelles valeurs d'état absolues $x_{new,i}$, lesquelles sont obtenues conformément à $x_{new,i} = x_{old,i} + \delta x_i$ à partir d'une ancienne valeur d'état $x_{old,i}$ et d'une valeur de correction $\delta x_i$, reconstruisent des valeurs d'état relatives $\check{z}_{ij}$ d'un premier objet i par rapport à un deuxième objet j et ainsi une constellation relative des objets du groupement par rapport aux valeurs d'état absolues par application de l'équation suivante :

$$\check{z}_{ij} = h\left(\left(x_{old,j} + \delta x_j\right) - \left(x_{old,i} + \delta x_i\right)\right) \quad \text{(Éq. 1)}$$

h étant une fonction qui calcule les valeurs d'état relatives $\check{Z}_{ij}$ à partir d'une différence des états absolus des objets i et j ;

l'équation 1 étant établie pour toutes les valeurs d'état relatives détectées dans le groupement, ce qui résulte en un système d'équations qui est résolu pour déterminer les valeurs de correction $\delta x_i$ et, par le biais du système d'équations, toutes les valeurs de correction $\delta x_i$ sont couplées entre elles et ne peuvent être résolues que globalement, toutes les valeurs d'état absolues et relatives et, le cas échéant, les covariances associées devant être transmises afin de créer un même niveau d'information uniforme pour tous les objets du groupement ;

la première condition aux limites étant qu'une somme pondérée des valeurs de correction donne zéro, selon

$$W_Q^{-1} \sum_{i=1}^{n} Q_i^{-1} \delta x_i = 0 \quad \text{(Éq. 2)} ;$$

n représentant le nombre d'objets dans le groupement, $W_Q$ représentant la normalisation avec $W_Q = \sum_{i=1}^{n} Q_i^{-1}$ et l'inverse de la covariance de la valeur de correction $Q_i^{-1}$ étant choisi comme pondération ;

une deuxième condition aux limites étant ajoutée à l'équation 1, laquelle limite les écarts pondérés entre les anciens et les nouveaux états absolus ;

la covariance de la valeur de correction $Q_i$ utilisée dans la première condition aux limites étant résolue par le biais de l'équation 3, qui résulte d'une forme linéarisée de l'équation 1 :

$$H_{ij} \underbrace{Var\left(\delta x_j - \delta x_i\right)}_{Q_i + Q_j - 2Cov(Q_i, Q_j)} H_{ij}^T = Var\left(\check{z}_{ij} - h\left(x_{old,j} - x_{old,i}\right)\right) \quad \text{(Éq. 3)},$$

avec $H_{ij} = \left.\frac{\partial h(x)}{\partial x}\right|_{x = x_j - x_i}$ ;

une troisième condition aux limites étant introduite, selon laquelle la somme des covariances pondérées des valeurs de correction représente une ellipse sphérique, laquelle reflète l'optimalité de la solution conformément à

$$Var\left(W_Q^{-1} \sum_{i=1}^{n} Q_i^{-1} \delta x_i\right) = W_Q^{-1} \sum_{i=1}^{n} Q_i^{-1} \underbrace{Var(\delta x_i)}_{Q_i} Q_i^{-T} = I ;$$

$Q_i$ étant approximé par la covariance de l'ancien état ou le système d'équations étant résolu par des procédés itératifs.

2. Procédé selon la revendication 1,
une covariance associée à chaque valeur d'état étant également échangée en plus des états relatifs détectés et des états absolus détectés.

3. Procédé selon la revendication 1 ou 2,
une valeur d'erreur absolue du groupement d'objets étant minimisée en vue de calculer la valeur de correction.

4. Procédé selon l'une des revendications précédentes, la valeur de correction étant utilisée dans un filtre d'au moins un objet pour corriger une valeur d'état de cet objet.

5. Procédé selon l'une des revendications précédentes, une valeur d'état de l'état absolu et/ou de l'état relatif contenant des informations sur un ou plusieurs des paramètres suivants d'un objet : position, vitesse, attitude, accélération, vitesse de rotation, position relative par rapport à un ou plusieurs autres objets, distance relative par rapport à un ou plusieurs autres objets, vitesse relative par rapport à un ou plusieurs autres objets, attitude relative par rapport à un ou plusieurs autres objets.

6. Procédé pour déterminer une valeur de correction d'un état d'un objet dans un groupement constitué de plusieurs objets, le procédé comprenant les étapes suivantes :

détection (11), par chaque objet du groupement, d'un état propre absolu dans un système de coordonnées existant ;

détection (12), par un premier objet du groupement, d'un état relatif du premier objet par rapport à un ou plusieurs autres objets du groupement ;

transmission (13), par le premier objet, de l'état relatif détecté et de l'état propre absolu détecté à une unité centrale par le biais d'une liaison de données, de sorte que l'unité centrale reçoit tous les états absolus et relatifs détectés des objets du groupement ;

calcul (15) d'une valeur de correction pour chaque objet du groupement par l'unité centrale sur la base des états absolus et relatifs de tous les objets du groupement ;

transmission des valeurs de correction à l'objet respectif du groupement ;

application (16), par chaque objet du groupement, de la valeur de correction propre à l'état propre absolu détecté ; **caractérisé en ce que** la valeur de correction $\delta x_i$ est calculée de telle sorte que les nouvelles valeurs d'état absolues $x_{new,i}$, lesquelles sont obtenues conformément à $x_{new,i} = x_{old,i} + \delta x_i$ à partir d'une ancienne valeur d'état $x_{old,i}$ et d'une valeur de correction $\delta x_i$, reconstruisent des valeurs d'état relatives $\check{Z}_{ij}$ d'un premier objet i par rapport à un deuxième objet j et ainsi une constellation relative des objets du groupement par rapport aux valeurs d'état absolues par application de l'équation suivante :

$$\check{z}_{ij} = h\left(\left(x_{old,j} + \delta x_j\right) - \left(x_{old,i} + \delta x_i\right)\right) \quad (\text{Éq. 1})$$

h étant une fonction qui calcule les valeurs d'état relatives $\check{Z}_{ij}$ à partir d'une différence des états absolus des objets i et j ;

l'équation 1 étant établie pour toutes les valeurs d'état relatives détectées dans le groupement, ce qui résulte en un système d'équations qui est résolu pour déterminer les valeurs de correction $\delta x_i$ et, par le biais du système d'équations, toutes les valeurs de correction $\delta x_i$ sont couplées entre elles et ne peuvent être résolues que globalement, toutes les valeurs d'état absolues et relatives et, le cas échéant, les covariances associées devant être transmises afin de mettre à disposition de l'unité centrale un même niveau d'information uniforme ;

la première condition aux limites étant qu'une somme pondérée des valeurs de correction donne zéro, selon

$$W_Q^{-1} \sum_{i=1}^{n} Q_i^{-1} \delta x_i = 0 \quad (\text{Éq. 2}) \; ;$$

n représentant le nombre d'objets dans le groupement, $W_Q$ représentant la normalisation avec $W_Q = \sum_{i=1}^{n} Q_i^{-1}$ et l'inverse de la covariance de la valeur de correction $Q_i^{-1}$ étant choisi comme pondération ;

une deuxième condition aux limites étant ajoutée à l'équation 1, laquelle limite les écarts pondérés entre les anciens et les nouveaux états absolus ;

la covariance de la valeur de correction $Q_i$ utilisée dans la première condition aux limites étant résolue par le biais de l'équation 3, qui résulte d'une forme linéarisée de l'équation 1 :

$$H_{ij} \underbrace{Var\left(\delta x_j - \delta x_i\right)}_{Q_i + Q_j - 2Cov(Q_i, Q_j)} H_{ij}^{T} = Var\left(\check{z}_{ij} - h\left(x_{old,j} - x_{old,i}\right)\right) \quad (\text{Éq. 3}),$$

$$H_{ij} = \frac{\partial h(x)}{\partial x}\bigg|_{x=x_j-x_i}$$

avec

une troisième condition aux limites étant introduite, selon laquelle la somme des covariances pondérées des valeurs de correction représente une ellipse sphérique, laquelle reflète l'optimalité de la solution conformément à

$$Var\left(W_Q^{-1} \sum_{i=1}^{n} Q_i^{-1} \delta x_i\right) = W_Q^{-1} \sum_{i=1}^{n} Q_i^{-1} \underbrace{Var(\delta x_i)}_{Q_i} Q_i^{-T} = I$$

$Q_i$ étant approximé par la covariance de l'ancien état ou le système d'équations étant résolu par des procédés itératifs.

7. Véhicule (100), notamment un aéronef, possédant :

une unité de détection (110), laquelle est configurée pour détecter des valeurs d'état absolues et relatives du véhicule, l'unité de détection (110) possédant un ou plusieurs capteurs (112, 116) destinés à déterminer un état absolu et un état relatif, et l'unité de détection possédant une interface de données (114), laquelle est configurée pour transmettre des valeurs d'état relatives et absolues propres et pour obtenir des valeurs d'état relatives et absolues d'objets d'un groupement ;

une première unité de filtrage (120), laquelle est configurée pour traiter les valeurs d'état absolues et relatives détectées par l'unité de détection afin de déterminer une valeur d'état absolue corrigée et une valeur d'état relative corrigée du véhicule par rapport à d'autres objets dans le groupement avec le procédé selon l'une des revendications 1 à 5 ;

une deuxième unité de filtrage (130), laquelle est configurée pour traiter les valeurs d'état absolues et relatives détectées par l'unité de détection afin de déterminer une valeur d'état relative à d'autres véhicules en tant que valeur de sortie ;

une unité de surveillance (140), laquelle est configurée pour surveiller un état de la première unité de filtrage (120) et de la deuxième unité de filtrage (130) ;

l'unité de surveillance étant configurée pour retransmettre la valeur d'état absolue corrigée et la valeur d'état relative corrigée à partir de la première unité de filtrage, lorsqu'un état de fonctionnement normal a été constaté pour la première unité de filtrage (120), le cas contraire pour transmettre la valeur d'état relative à partir de la deuxième unité de filtrage, lorsqu'un état de fonctionnement défectueux a été constaté pour la première unité de filtrage (120) ou lorsqu'une précision relative estimée de la deuxième unité de filtrage est meilleure qu'une précision relative estimée de la première unité de filtrage.

8. Véhicule (100) selon la revendication 7,
l'unité de surveillance (140) étant configurée pour classer l'état de la première unité de filtrage comme état de fonctionnement défectueux lorsqu'aucune liaison de données n'est établie par le biais de l'interface de données (114) de l'unité de détection (110).

10

11

12

13

14

15

16

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2363731 A1
- CN 111273687 A

- FR 2632755 A1

**In der Beschreibung aufgeführte Nicht-Patentliteratur**

- **LI, HAO** ; **NASHASHIBI, FAWZI**. Cooperative multi-vehicle localization using split covariance intersection filter. *IEEE Intelligent transportation systems magazine*, 2013, vol. 5 (2), 33-44

- Cooperative vehicle positioning via V2V communications and onboard sensors. **FUJI, SAE**. 2011 IEEE vehicular technology conference (VTC Fall). IEEE, 2011, 1-5